# EUROPEAN PATENT APPLICATION

(11) **EP 4 675 647 A1**
(43) Date of publication of application: **07.01.2026**
(21) Application number: 24767251.2
(22) Date of filing: 08.03.2024
(51) Int. Cl.: G21K 1/06, G02B 5/08, G02B 5/10, G02B 17/06, G02B 21/00, G02B 23/00, G21K 1/00

(54) **MIRROR DEVICE, OPTICAL DEVICE, AND LASER NUCLEAR FUSION REACTOR**

(30) Priority: 09.03.2023 JP 2023036579; 28.04.2023 JP 2023074850
(71) Applicant: NATIONAL UNIVERSITY CORPORATION TOKAI NATIONAL HIGHER EDUCATION AND RESEARCH SYSTEM, Nagoya-shi, Aichi 464-8601 (JP)
(72) Inventor: INOUE, Takato, Nagoya-shi Aichi 464-8601 (JP); MATSUYAMA, Satoshi, Nagoya-shi Aichi 464-8601 (JP)
(74) Representative: Seemann & Partner Patentanwälte mbB
(86) International application number: PCT/JP2024/009023
(87) International publication number: WO 2024/185886

(57) **Abstract**

A mirror device (10) includes a first mirror (12) having a first reflective surface (22) on which light (20) is incident, and a second mirror (14) located away from the first reflective surface (22) in a direction normal to the first reflective surface (22). The second mirror (14) has a second reflective surface (24) on which the light (20) is incident and an opposite surface (26) to the second reflective surface (24), the opposite surface (26) faces the first reflective surface (22), and the second reflective surface (24) is deformable.

## Description

### TECHNICAL FIELD

### (CROSS REFERENCE TO RELATED APPLICATIONS)

This application claims priority to Japanese Patent Application No. 2023-036579 filed on March 9, 2023 and Japanese Patent Application No. 2023-074850 filed on April 28, 2023, which are incorporated herein by reference in their entireties.

### (TECHNICAL FIELD)

The present disclosure relates to a mirror device, an optical device, and a laser nuclear fusion reactor.

### BACKGROUND ART

X-ray analysis techniques are widely used in the academic and industrial fields. In recent years, X-ray microspectroscopic imaging for analyzing a local structure of each element of an object using X-ray absorption fine structure (XAFS) or X-ray fluorescence has attracted attention. X-ray microspectroscopic imaging uses a wide range of X-ray wavelengths, which requires an X-ray optical system with low chromatic aberration.

Examples of optical elements used in the X-ray optical system include a compound refractive lens that utilizes refraction, a Fresnel zone plate that utilizes diffraction, and a grazing-incidence total reflection mirror that utilizes reflection. Among them, the grazing-incidence total reflection mirror has the advantages of high X-ray utilization efficiency and low chromatic aberration. Moreover, examples of optical systems free of coma aberration include an Advanced Kirkpatrick-Baez (AKB) mirror optical system using four grazing-incidence total reflection mirrors. Furthermore, a deformable mirror is also used to make the optical properties of the X-ray optical system tunable, the deformable mirror being obtained by attaching a piezoelectric element to a total reflection mirror and structured to control the shape of a reflective surface on the basis of the deformation amount of the piezoelectric element (see, for example, Patent Literature 1).

### RELATED-ART LITERATURE

### PATENT LITERATURE

Patent Literature 1: JP 2021-21897

### SUMMARY OF INVENTION

### TECHNICAL PROBLEM

X-ray microspectroscopic imaging reportedly achieves a spatial resolution of approximately 30 nm, but higher spatial resolution is still required. To achieve higher spatial resolution, it is effective to increase the numerical aperture (NA) of the X-ray optical system. However, an increase in the numerical aperture leads to a larger grazing-incidence angle of X-rays in the grazing-incidence total reflection mirror, preventing the total reflection condition from being met. The use of a multi-layered mirror that utilizes Bragg reflection allows an increase in the grazing-incidence angle of X-rays but causes chromatic aberration.

The present disclosure has been made in view of such problems, and it is therefore one exemplary object of the present disclosure to provide a technique for increasing the numerical aperture of an optical system with low chromatic aberration.

### SOLUTION TO PROBLEM

A mirror device according to one aspect of the present disclosure includes a first mirror having a first reflective surface on which light is incident, and a second mirror located away from the first reflective surface in a direction normal to the first reflective surface. The second mirror has a second reflective surface on which the light is incident and an opposite surface to the second reflective surface, the opposite surface faces the first reflective surface, and the second reflective surface is deformable.

A mirror device according to another aspect of the present disclosure includes a piezoelectric substrate having a reflective surface on which light is incident and an opposite surface to the reflective surface, a first electrode provided on the reflective surface, a second electrode provided on the opposite surface, and a power supply structured to apply a voltage between the first electrode and the second electrode. The piezoelectric substrate includes a first piezoelectric layer having the reflective surface and a second piezoelectric layer having the opposite surface. The second piezoelectric layer is made of a material identical to a material of the first piezoelectric layer and has a polarization direction opposite to a polarization direction of the first piezoelectric layer.

An optical device according to still another aspect of the present disclosure includes an optical system including a mirror device according to one aspect of the present disclosure, and a detector structured to detect light exiting the optical system.

An optical device according to still another aspect of the present disclosure includes an optical system including a mirror device according to one aspect of the present disclosure, and a sample holder structured to hold a sample that is irradiated with light exiting the optical system.

An optical device according to still another aspect of the present disclosure includes a laser light source structured to output laser light, a deformable mirror structured to correct a wavefront of the laser light, and a focusing optical element structured to focus the laser light reflected by the deformable mirror. The deformable mirror includes a piezoelectric substrate having a reflective surface on which the laser light is incident and an opposite surface to the reflective surface and including single-crystal lithium niobate (LN), a first electrode provided on the reflective surface, a second electrode provided on the opposite surface, a dielectric multi-layered mirror provided on the first electrode and structured to reflect the laser light, and a power supply structured to apply a voltage between the first electrode and the second electrode.

A still another aspect of the present disclosure is a laser nuclear fusion reactor. The laser nuclear fusion reactor includes an optical device according to one aspect of the present disclosure, and a reaction vessel having an internal space into which the laser light output from the optical device is introduced, the reaction vessel being structured to store fuel in which nuclear fusion is induced by irradiation with the laser light.

Note that any combination of the above-described components, as well as variations resulting from interchangeable replacement of the components or expressions of the present disclosure among methods, systems, and the like, are also effective embodiments of the present disclosure.

### ADVANTAGEOUS EFFECTS OF INVENTION

According to one aspect of the present disclosure, the numerical aperture of the optical system with low chromatic aberration can be increased.

### BRIEF DESCRIPTION OF DRAWINGS

Fig. 1 is a cross-sectional view schematically illustrating a configuration of an X-ray mirror device according to a first embodiment.
Fig. 2 is a cross-sectional view schematically illustrating a configuration of a deformable mirror according to a second embodiment.
Figs. 3(a) to 3(c) are diagrams schematically illustrating an example of a method for forming a polarization-inverted layer.
Fig. 4 is a graph showing an example of a deformation amount of a reflective surface of the deformable mirror.
Fig. 5 is a top view schematically illustrating a configuration of a deformable mirror according to a third embodiment.
Fig. 6 is a cross-sectional view schematically illustrating a configuration of a deformable mirror according to a fourth embodiment.
Fig. 7 is a bottom view schematically illustrating a configuration of a deformable mirror according to a fifth embodiment.
Fig. 8 is a bottom view schematically illustrating a configuration of a deformable mirror according to a sixth embodiment.
Fig. 9 is a cross-sectional view schematically illustrating a configuration of a deformable mirror according to a seventh embodiment.
Fig. 10 is a top view schematically illustrating a configuration of a deformable mirror according to an eighth embodiment.
Fig. 11 is a graph showing an example of a deformation amount of a reflective surface of the deformable mirror.
Figs. 12(a) and 12(b) are diagrams schematically illustrating an example of operation of the deformable mirror.
Fig. 13 is a cross-sectional view schematically illustrating a configuration of an X-ray mirror device according to a ninth embodiment.
Fig. 14 is a cross-sectional view schematically illustrating a configuration of an X-ray mirror device according to a tenth embodiment.
Fig. 15 is a cross-sectional view schematically illustrating a configuration of an X-ray mirror device according to an eleventh embodiment.
Fig. 16 is a perspective view schematically illustrating a configuration of an X-ray device according to a twelfth embodiment.
Fig. 17 is a diagram schematically illustrating a configuration of an optical device according to a thirteenth embodiment.
Fig. 18 is a diagram schematically illustrating a configuration of a laser nuclear fusion reactor according to a fourteenth embodiment.

### DESCRIPTION OF EMBODIMENTS

Before describing the present disclosure in detail, an overview will be provided. The present disclosure relates to an X-ray mirror device that reflects X-rays. The X-ray mirror device according to the present disclosure includes an outer mirror (also referred to as a first mirror) and an inner mirror (also referred to as a second mirror) arranged between an optical axis and the outer mirror. That is, the X-ray mirror device has a nested structure formed by a combination of the outer mirror and the inner mirror. According to the present disclosure, the combination of the outer mirror and the inner mirror can increase the numerical aperture of an X-ray optical system while maintaining the grazing-incidence angle of X-rays incident on each mirror at or below the total reflection angle (for example, 10 mrad).

In the X-ray optical system, because the grazing-incidence angles of the mirrors are extremely small, the distance from the optical axis to the outer mirror also becomes extremely small, and can be less than or equal to 5 mm, for example. In this case, to arrange the inner mirror between the optical axis and the outer mirror, the inner mirror needs to be extremely thin, for example, with a thickness of 1 mm or less, or 500 µm or less. Furthermore, it is required that a reflective surface in the X-ray optical system have a shape accuracy of 10 nm or less or 5 nm or less. It is therefore required that the inner mirror maintain a surface shape accuracy of 10 nm or less for an extremely thin substrate, which is a highly challenging specification.

In the present disclosure, a configuration where the inner mirror is formed using a piezoelectric substrate, and electrodes are formed on both sides of the piezoelectric substrate makes the reflective surface corresponding to the surface of the piezoelectric substrate deformable in response to an applied voltage. That is, a deformable mirror is used as the inner mirror. The use of an extremely thin piezoelectric substrate allows the inner mirror to be arranged in a limited space between the optical axis and the outer mirror. Furthermore, the use of the deformable mirror as the inner mirror, which is formed using a thin substrate, enables compensation for deviations from the ideal shape and improves the shape accuracy of the reflective surface of the inner mirror.

Hereinafter, embodiments for carrying out the present disclosure will be described in detail with reference to the drawings. Note that, in the description, the same components are denoted by the same reference numerals, and redundant descriptions will be omitted where appropriate. Furthermore, for ease of understanding, the dimensional ratios of component in the drawings do not necessarily correspond to actual dimensional ratios.

In the following embodiments, an X-ray mirror device for reflecting X-rays will be described, but the present disclosure is applicable to a mirror device for reflecting X-rays or light having a wavelength different from that of X-rays. In this case, the light may be visible light, infrared light, ultraviolet light, or extreme ultraviolet light. The light may be gamma rays having a wavelength shorter than that of X-rays. The light may be laser light. The mirror device can be used in any optical device that utilizes light. In the mirror device, a surface on which light is incident may be referred to as an incident surface or a reflective surface.

### (First Embodiment)

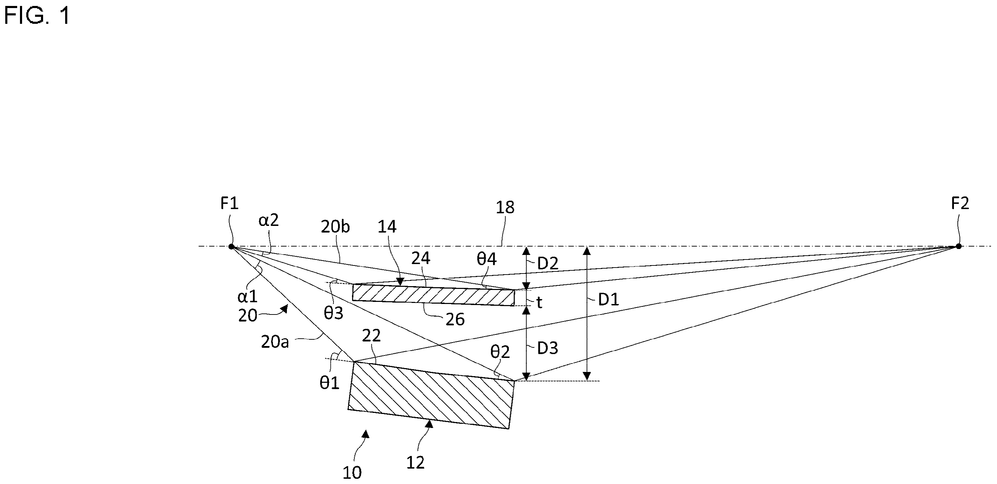

Fig. 1 is a cross-sectional view schematically illustrating a configuration of an X-ray mirror device 10 according to a first embodiment. The X-ray mirror device 10 includes an outer mirror (or first mirror) 12 and an inner mirror (or second mirror) 14. The X-ray mirror device 10 is structured to reflect X-rays 20 from a first focal point F1 and focus the X-rays 20 onto a second focal point F2. In Fig. 1, a straight line connecting the first focal point F1 and the second focal point F2 is defined as an optical axis 18. Furthermore, a direction toward the optical axis 18 may be referred to as an inward direction, and a direction away from the optical axis 18 may be referred to as an outward direction.

The X-ray mirror device 10 illustrated in Fig. 1 can be used as an objective lens. For example, a sample is placed at the first focal point F1, and X-rays from the sample are magnified and focused into an image at the second focal point F2. An X-ray detection device structured to detect the magnified image (X-ray image) of the sample is arranged at the second focal point F2. The X-ray mirror device 10 increases the sum of angular ranges α1 and α2 of the X-rays 20 (which corresponds to the numerical aperture) from the first focal point F1 where the X-ray mirror device 10 can focus using the combination of the outer mirror 12 and the inner mirror 14. This enables an increase in the spatial resolution of the sample being observed, achieving, for example, a spatial resolution of 10 nm or less or 5 nm or less.

The outer mirror 12 has an outer reflective surface (or first reflective surface) 22 on which the X-rays 20 are incident at a grazing angle. The inner mirror 14 has an inner reflective surface (or second reflective surface) 24 on which the X-rays 20 are incident at a grazing angle and an opposite surface (or back surface) 26 to the inner reflective surface 24. The outer reflective surface 22 and the inner reflective surface 24 are each formed as, for example, an elliptically shaped concave surface having two focal points that coincide with the first focal point F1 and the second focal point F2.

The outer reflective surface 22 and the inner reflective surface 24 can each be formed as a convex or concave surface shaped arcuately, elliptically, hyperbolically, or parabolically. The outer reflective surface 22 and the inner reflective surface 24 may each have curvature only in one direction (for example, the optical axis direction). The outer reflective surface 22 and the inner reflective surface 24 may each be formed as a curved surface having curvature in two directions or a flat surface.

The outer mirror 12 is arranged away from the optical axis 18 to ensure that the outer reflective surface 22 faces inward. The outer mirror 12 is arranged to ensure that the optical axis 18 lies in the direction normal to the outer reflective surface 22 as viewed from the outer reflective surface 22.

The inner mirror 14 is arranged between the optical axis 18 and the outer mirror 12. The inner mirror 14 is arranged to ensure that the inner reflective surface 24 faces inward and the back surface 26 faces outward. The inner mirror 14 is arranged to ensure that the optical axis 18 lies in the direction normal to the inner reflective surface 24 as viewed from the inner reflective surface 24. The inner mirror 14 is arranged away from the outer reflective surface 22 in the direction normal to the outer reflective surface 22. The back surface 26 of the inner mirror 14 faces the outer reflective surface 22.

The outer reflective surface 22 and the inner reflective surface 24 are each preferably formed as a grazing-incidence total reflection mirror free of chromatic aberration. The outer reflective surface 22 and the inner reflective surface 24 are each configured with a thin metal film including a single metal material such as nickel (Ni), chromium (Cr), rhodium (Rh), platinum (Pt), or gold (Au). To avoid chromatic aberration, it is preferable that the outer reflective surface 22 and the inner reflective surface 24 be configured without a multi-layered mirror that utilizes Bragg reflection. The multi-layered mirror includes, for example, a multi-layered film formed by alternately and periodically stacking a plurality of first layers of heavy elements and a plurality of second layers of light elements.

The outer reflective surface 22 and the inner reflective surface 24 may each include a multi-layered mirror for applications tolerating chromatic aberration. However, to mitigate the impact of chromatic aberration, it is preferable to set the number of layers stacked in the multi-layered mirror (for example, the total number of the first and second layers) to 100 or less, 30 or less, or 15 or less. For an application for measuring X-ray absorption near edge structure (XANES), optical properties that render chromatic aberration negligible within an energy range of, for example, approximately ±100 eV are required, and in this case, the number of layers stacked in the multi-layered mirror is preferably less than or equal to 100. For an application for measuring extended X-ray absorption fine structure (EXAFS), optical properties that render chromatic aberration negligible within an energy range of, for example, approximately ±500 eV are required, and in this case, the number of layers stacked in the multi-layered mirror is preferably less than or equal to 30, or less than or equal to 15.

Note that one of the outer reflective surface 22 or the inner reflective surface 24 may be formed as a total reflection mirror, and the other may be formed as a multi-layered mirror. For example, the outer reflective surface 22 where the grazing-incidence angle is relatively large may be formed as a multi-layered mirror, and the inner reflective surface 24 where the grazing-incidence angle is relatively small may be formed as a total reflection mirror.

The outer reflective surface 22 reflects an X-ray beam 20a within the first angular range α1 from the first focal point F1 toward the second focal point F2. The first angular range α1 can be expressed as α1 ≈ θ1 - θ2 where θ1 and θ2 represent the maximum and minimum grazing-incidence angles of the X-rays 20 incident on the outer reflective surface 22, respectively. To totally reflect the X-rays 20 on the outer reflective surface 22, it is required that the maximum grazing-incidence angle θ1 be less than or equal to the critical angle. The magnitude of the critical angle depends on the energy (that is, the wavelength) of the X-rays 20, and the larger the energy of the X-rays 20, the smaller the critical angle. For example, when the energy of the X-rays is 10 keV, the magnitude of the critical angle is about 7 mrad. From the viewpoint of maximizing the first angular range α1, the maximum grazing-incidence angle θ1 on the outer reflective surface 22 is preferably as large as possible. It is therefore preferable that the maximum grazing-incidence angle θ1 on the outer reflective surface 22 be as close as possible to the critical angle serving as the upper limit.

The inner reflective surface 24 reflects the X-ray beam 20a within the second angular range α2 from the first focal point F1 toward the second focal point F2. The second angular range α2 is different from the first angular range α1. The second angular range α2 can be expressed as α2 ≈ θ3 - θ4 where θ3 and θ4 represent the maximum and minimum grazing-incidence angles of the X-rays 20 incident on the inner reflective surface 24, respectively. Since the inner reflective surface 24 is arranged inward relative to the outer reflective surface 22, the maximum grazing-incidence angle θ3 on the inner reflective surface 24 is smaller than the maximum grazing-incidence angle θ1 on the outer reflective surface 22. For example, the maximum grazing-incidence angle θ3 on the inner reflective surface 24 can be smaller than the critical angle.

In a case where the grazing-incidence angle of the X-rays 20 is small, the shape accuracy required for the reflective surface is relaxed. Therefore, the inner reflective surface 24 may have lower shape accuracy than the outer reflective surface 22. The outer reflective surface 22 and the inner reflective surface 24 each have a shape accuracy (Peak-to-Valley; PV) of 10 nm or less or 5 nm or less. The outer reflective surface 22 preferably has a shape accuracy (PV) of 3 nm or less, for example, approximately 2 nm. The inner reflective surface 24 may have a shape accuracy (PV) of 3 nm or more, for example, approximately 5 nm. The shape accuracy (PV) of each of the outer reflective surface 22 and the inner reflective surface 24 can be achieved by performing known precision processing such as elastic emission machining (EEM) after rough processing such as cutting or mechanical polishing.

A first distance D1 becomes a small value due to constraints that the maximum grazing-incidence angle θ1 on the outer reflective surface 22 is less than or equal to the critical angle (for example, 10 mrad) and the X-ray optical system is confined to a practical size (for example, 1 m to 10 m). The first distance D1 from the optical axis 18 to the outer reflective surface 22 is less than or equal to 10 mm, less than or equal to 5 mm, less than or equal to 3 mm, or less than or equal to 1 mm, for example. The first distance D1 is greater than or equal to 100 µm, greater than or equal to 200 µm, greater than or equal to 300 µm, or greater than or equal to 500 µm, for example.

The first distance D1 corresponds to the sum of a second distance D2 from the optical axis 18 to the inner reflective surface 24, a thickness t of the inner mirror 14 from the inner reflective surface 24 to the back surface 26, and a third distance D3 from the inner mirror 14 to the outer reflective surface 22 (that is, D1 = D2 + t + D3). To maximize the sum of the first angular range α1 and the second angular range α2, it is preferable to minimize the thickness t of the inner mirror 14 as much as possible. The thickness t of the inner mirror 14 is less than or equal to 1 mm, 500 µm, 300 µm, or 200 µm, for example. The thickness t of the inner mirror 14 is greater than or equal to 10 µm, 50 µm, 100 µm, 150 µm, or 200 µm, for example. Each of the second distance D2 and the third distance D3 is greater than or equal to 50 µm, greater than or equal to 100 µm, greater than or equal to 200 µm, or greater than or equal to 500 µm, for example. Each of the second distance D2 and the third distance D3 is less than or equal to 5 mm, less than or equal to 3 mm, less than or equal to 2 mm, or less than or equal to 1 mm, for example. The third distance D3 is greater than the second distance D2, for example. The third distance D3 may be equal to or less than the second distance D2.

The inner mirror 14 is configured as a deformable mirror using a piezoelectric substrate. Configuring the inner mirror 14 as a deformable mirror enables the achievement of both an extremely small thickness t and high shape accuracy of the inner reflective surface 24. Details of the deformable mirror that can be used as the inner mirror 14 will be described later. On the other hand, since the outer mirror 12 has no thickness constraint, any type of mirror can be used as long as the shape accuracy of the outer reflective surface 22 can be achieved.

The outer mirror 12 may be a deformable mirror using a piezoelectric material, or may be a normal mirror not using a piezoelectric material (that is, not deformable). In a case where the outer mirror 12 is a normal mirror, the outer mirror 12 is configured with a substrate of any material that allows precise surface shaping, such as silicon or glass. In a case where the outer mirror 12 is a deformable mirror, a piezoelectric element attached to the surface of a substrate having the outer reflective surface 22 may be used, or a piezoelectric substrate having the outer reflective surface 22 may be used.

### (Second Embodiment)

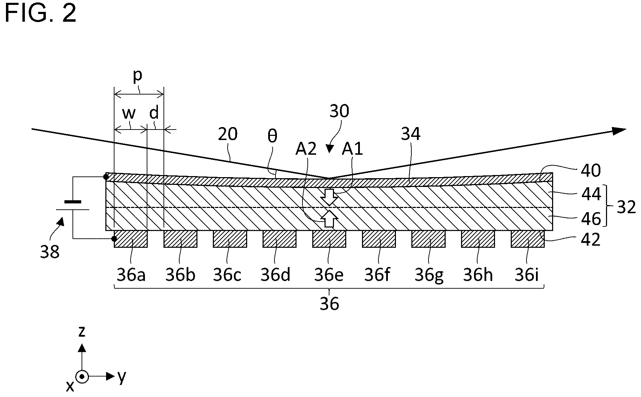

Fig. 2 is a cross-sectional view schematically illustrating a configuration of a deformable mirror 30 according to a second embodiment. The deformable mirror 30 illustrated in Fig. 2 can be used as the inner mirror 14 illustrated in Fig. 1. The deformable mirror 30 illustrated in Fig. 2 can also be used as the outer mirror 12 illustrated in Fig. 1. The deformable mirror 30 includes a piezoelectric substrate 32, a reflective surface electrode (or first electrode) 34, a back surface electrode (or second electrode) 36, and a power supply 38.

In Fig. 2, a direction orthogonal to both the incident and reflection directions of the X-rays 20 on the deformable mirror 30 is defined as an x direction. A thickness direction of the piezoelectric substrate 32 is defined as a z direction, and a direction orthogonal to both the x direction and the z direction is defined as a y direction. The y direction corresponds to a direction in which the optical axis 18 of the X-rays 20 extends (also referred to as an optical axis direction). The illustrated coordinate axes are provided for ease of understanding of the description, and are not intended to limit the orientation of the deformable mirror 30 during use.

The piezoelectric substrate 32 has a reflective surface 40 and an opposite surface (or back surface) 42 to the reflective surface 40. The reflective surface 40 is provided with the reflective surface electrode 34, and the back surface 42 is provided with the back surface electrode 36. The piezoelectric substrate 32 has a thickness between 10 µm and 10 mm, inclusive; for example, between 50 µm and 1 mm, inclusive. The piezoelectric substrate 32 may have a thickness of 100 µm or more, 200 µm or more, or 250 µm or more. The piezoelectric substrate 32 may have a thickness of 500 µm or less, 400 µm or less, or 300 µm or less.

The piezoelectric substrate 32 includes a piezoelectric material; specifically, a piezoelectric single-crystal material such as lithium niobate (LN) or lithium tantalate (LT). As the piezoelectric substrate 32, for example, a 127.86 degree Y-cut LN substrate, a 140 degree Y-cut LN substrate, a 36 degree Y-cut LN substrate, or the like can be used.

The piezoelectric substrate 32 deforms in response to a voltage applied between the reflective surface electrode 34 and the back surface electrode 36. The piezoelectric substrate 32 includes a first piezoelectric layer 44 and a second piezoelectric layer 46. The first piezoelectric layer 44 and the second piezoelectric layer 46 elongate and contract in the y direction in response to a voltage applied in the z direction. The first piezoelectric layer 44 and the second piezoelectric layer 46 are made of the same material and have opposite polarization directions. In the example illustrated in Fig. 2, a polarization direction A1 of the first piezoelectric layer 44 is defined as a -z direction, and a polarization direction A2 of the second piezoelectric layer 46 is defined as a +z direction. When a voltage is applied to cause the first piezoelectric layer 44 to elongate, the second piezoelectric layer 46 contracts. When a voltage is applied to cause the first piezoelectric layer 44 to contract, the second piezoelectric layer 46 elongates. As a result, the piezoelectric substrate 32 functions like a bimorph piezoelectric element. It is preferable that the first piezoelectric layer 44 and the second piezoelectric layer 46 have approximately the same thickness.

The piezoelectric substrate 32 can be formed, for example, by bonding two substrates corresponding to the first piezoelectric layer 44 and the second piezoelectric layer 46 with their polarization directions opposite to each other. It is preferable that the first piezoelectric layer 44 and the second piezoelectric layer 46 be bonded using an adhesive-free method such as optical contact.

The piezoelectric substrate 32 may be formed by heat-treating a substrate with a uniform polarization direction. For the LN substrate and the LT substrate, it is known that a polarization-inverted layer whose polarization direction is reversed by heat treatment at a temperature near the Curie point is formed.

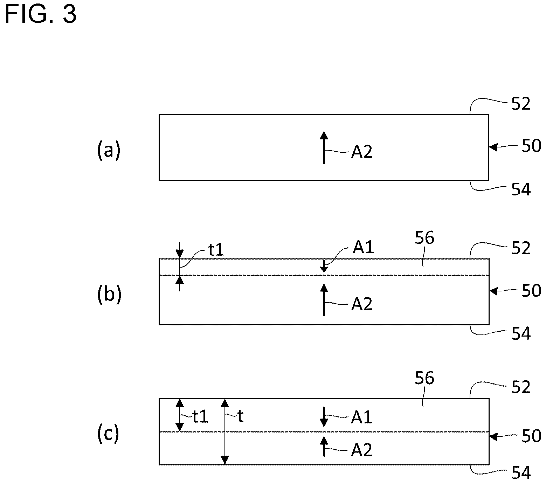

Figs. 3(a) to 3(c) are diagrams schematically illustrating an example of a method for forming a polarization-inverted layer 56, illustrating a case where the LN substrate is used. Fig. 3(a) illustrates an LN substrate 50 before heat treatment. The LN substrate 50 has a positive surface 52 and a negative surface 54. A polarization direction A2 of the LN substrate 50 is a direction from the negative surface 54 toward the positive surface 52. Fig. 3(b) illustrates the LN substrate 50 during the heat treatment. The polarization-inverted layer 56 is formed near the positive surface 52 by the heat treatment. The temperature for the heat treatment is, for example, 1100 to 1150°C. A thickness t1 of the polarization-inverted layer 56 varies in a manner that depends on the duration of the heat treatment, and the longer the duration of the heat treatment, the greater the thickness t1. Fig. 3(c) illustrates the LN substrate 50 after the heat treatment. By adjusting the duration of the heat treatment, it is possible to reduce the thickness t1 of the polarization-inverted layer 56 to half of the thickness t of the LN substrate 50. For example, in a case where the thickness t of the LN substrate 50 is 200 µm, it is required that the heat treatment be performed at 1150°C for about 6 hours to make the thickness t1 of the polarization-inverted layer 56 equal to 100 µm.

In a case where the LT substrate is used as the piezoelectric substrate 32, it is required to apply, before the heat treatment, a proton exchange method that immerses the LT substrate in benzoic acid, pyrophosphoric acid, or the like to exchange lithium ions (Li⁺) on the surface of the substrate with protons (H⁺). After the proton exchange, the LT substrate is heat-treated at 550°C to 600°C to form the first piezoelectric layer 44 and the second piezoelectric layer 46 with their polarization directions opposite to each other. In a case where the LT substrate is used, the polarization direction is reversed compared to the case where the LN substrate is used, the polarization direction of the first piezoelectric layer 44 is the +z direction, and the polarization direction of the second piezoelectric layer 46 is the -z direction. It is believed that, during the heat treatment, protons diffuse into the crystal interior, which causes the polarization-inverted layer to form on the negative surface instead of the positive surface.

Note that, as the piezoelectric substrate 32, a piezoelectric material that is of not the bimorph type may be used. In this case, the piezoelectric substrate 32 may have a uniform polarization direction in its entirety. In a case where the piezoelectric substrate 32 is not of the bimorph type, the piezoelectric substrate 32 may be structured to elongate and contract in the z direction in response to a voltage applied in the z direction.

Returning to Fig. 2, the reflective surface 40 has shape accuracy and surface roughness required for a grazing-incidence total reflection mirror. The reflective surface 40 has, for example, a shape accuracy (PV) of 10 nm or less, preferably between 2 nm and 5 nm, inclusive. The reflective surface 40 has, for example, a surface roughness (Rms) of 0.5 nm or less, preferably between 0.05 nm and 0.2 nm, inclusive.

The reflective surface 40 is, for example, a convex or concave surface shaped arcuately, elliptically, hyperbolically, or parabolically, and has curvature only in one direction (for example, in the y direction). In the example illustrated in Fig. 2, the reflective surface 40 is a concave surface. The reflective surface 40 may be a flat surface or a curved surface having curvature in two directions (for example, the x direction and the y direction). The back surface 42 is, for example, a polished flat surface.

The reflective surface electrode 34 is provided on the reflective surface 40. The reflective surface electrode 34 has, for example, a thickness between 10 nm and 100 nm, inclusive. The reflective surface electrode 34 is provided to cover the entire reflective surface 40 and have a uniform thickness throughout the reflective surface 40, for example. Since the reflective surface electrode 34 has a uniform thickness, the surface of the reflective surface electrode 34 has a shape conforming to the reflective surface 40, and has shape accuracy and surface roughness equivalent to those of the reflective surface 40. The reflective surface electrode 34 functions not only as an electrode that applies a voltage to the piezoelectric substrate 32, but also as a total reflection mirror that totally reflects the X-rays 20.

As a material of the reflective surface electrode 34, nickel (Ni), chromium (Cr), rhodium (Rh), platinum (Pt), gold (Au), or the like can be used. The reflective surface electrode 34 may be configured with a thin metal film of a single material, or may be configured as a multi-layered structure including thin metal films of different materials. The reflective surface electrode 34 may have, for example, an adhesive layer of Cr, Ti or the like that is in contact with the reflective surface 40, and a reflective layer of Rh, Pt, Au or the like formed on the adhesive layer. The reflective surface electrode 34 can be formed using a vapor deposition method or a sputtering method.

The back surface electrode 36 is provided on the back surface 42. The back surface electrode 36 includes a plurality of electrodes 36a, 36b, 36c, 36d, 36e, 36f, 36g, 36h, and 36i arranged at intervals in the optical axis direction (for example, in the y direction). A width w of each of the plurality of electrodes 36a to 36i in the optical axis direction (for example, in the y direction) is, for example, between 0.5 mm and 10 mm, inclusive, preferably between 1 mm and 6 mm, inclusive. A spacing d between the plurality of electrodes 36a to 36i in the optical axis direction (for example, in the y direction) is, for example, between 0.1 mm and 5 mm, inclusive, preferably between 0.5 mm and 4 mm, inclusive. A pitch p (the sum of the width w and the spacing d) of the plurality of electrodes 36a to 36i in the optical axis direction (for example, in the y direction) is, for example, between 1 mm and 15 mm, inclusive, preferably between 1.5 mm and 10 mm, inclusive.

The plurality of electrodes 36a to 36i are configured with, for example, a constant width w, spacing d, and pitch p in the optical axis direction (for example, in the y direction). At least one of the width w, the spacing d, or the pitch p of each of the plurality of electrodes 36a to 36i may be different from one another. For example, in a case where an angle θ of the X-rays 20 incident on the reflective surface 40 at a grazing angle varies in a manner that depends on the position in the optical axis direction, to make an effective pitch p × θ from the viewpoint of the X-rays 20 constant, the pitch p of each of the plurality of electrodes 36a to 36i may be different from one another.

The back surface electrode 36 includes a metal material, such as nickel (Ni), chromium (Cr), copper (Cu), silver (Ag), or gold (Au). The thickness of the back surface electrode 36 is not particularly limited, but is, for example, between 100 nm and 1000 nm, inclusive.

The power supply 38 applies a DC voltage between the reflective surface electrode 34 and the back surface electrode 36. The power supply 38 is capable of applying different voltages to each of the plurality of electrodes 36a to 36i. In Fig. 2, to prevent the drawing from becoming complicated, the power supply 38 is connected to only one electrode 36a among the plurality of electrodes 36a to 36i. In practice, the power supply 38 is connected to each of the plurality of electrodes 36a to 36i. The power supply 38 is structured to independently control the voltage applied to each of the plurality of electrodes 36a to 36i. The power supply 38 applies a DC voltage variable in the range from -1 kV to +1 kV, for example. The power supply 38 individually and variably controls the voltage applied to each of the plurality of electrodes 36a to 36i to control the deformation amount of the piezoelectric substrate 32 at positions corresponding to each of the plurality of electrodes 36a to 36i, thereby enabling variable control of the shape of the reflective surface 40.

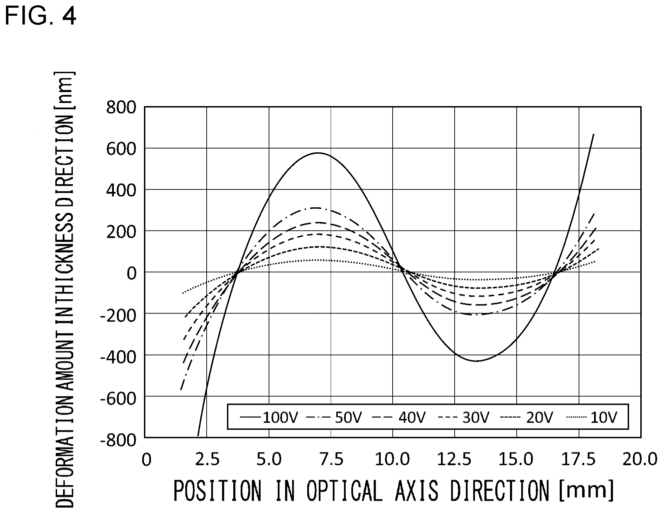

Fig. 4 is a graph showing an example of the deformation amount of the reflective surface 40 of the deformable mirror 30. Fig. 4 illustrates the deformation amounts of the reflective surface 40 in a case where the magnitude of the voltage applied to the plurality of electrodes 36a to 36i is set to 10 V, 20 V, 30 V, 40 V, 50 V, and 100 V with the height of the reflective surface 40 when no voltage is applied to the plurality of electrodes 36a to 36i as a reference. The voltage applied to the plurality of electrodes 36a to 36i alternates between positive and negative in the optical axis direction (for example, in the y direction). The vertical axis of the graph represents the deformation amount [nm] in the thickness direction (z direction), and the horizontal axis of the graph represents the position [mm] in the optical axis direction (for example, in the y direction). In the example shown in Fig. 4, the width w of each of the plurality of electrodes 36a to 36i is set to 5 mm, and the spacing d is set to 1 mm. As the piezoelectric substrate 32, a 250 µm-thick bimorph LN substrate is used.

As shown in Fig. 4, convex and concave portions appear on the reflective surface 40 after deformation at intervals of about 6 mm; therefore, it can be seen that the reflective surface 40 is successfully deformed to correspond to the positions of the plurality of electrodes 36a to 36i arranged at a pitch of 6 mm. In a case where the magnitude of the voltage applied to the plurality of electrodes 36a to 36i is set to 100 V, a height difference between the convex and concave portions is about 1 µm, achieving a large deformation amount attributable to the bimorph type. Furthermore, it can be seen that there is high linearity between the applied voltage and the deformation amount. Moreover, neither hysteresis that is present in piezoelectric ceramic materials such as PZT nor drift in deformation amount over time even though the applied voltage is kept constant is observed. Therefore, with the deformable mirror 30 according to the present embodiment, the deformation amount can be uniquely determined on the basis of the applied voltage, and the shape of the reflective surface 40 can be stably controlled with high reproducibility.

According to the present embodiment, since the shape of the reflective surface 40 can be variably controlled while irradiating the reflective surface 40 with the X-rays 20, the shape of the reflective surface 40 can be adjusted afterward so as to be optimal for the X-ray mirror device 10 equipped with the deformable mirror 30. For example, by measuring the shape of the reflective surface 40 using a pencil beam method with X-rays, it is possible to precisely measure and adjust the shape of the reflective surface 40 on the spot with the deformable mirror 30 applied to the X-ray mirror device 10.

In a case where the deformable mirror 30 is used as the inner mirror 14, the piezoelectric substrate 32 that is extremely thin may cause the inner reflective surface 24 to experience distortion due to the force supporting the inner mirror 14. According to the present embodiment, since the inner mirror 14 is the deformable mirror 30, the distortion caused by the force supporting the inner reflective surface 24 can be compensated for, and the inner reflective surface 24 can be deformed into the ideal shape. For example, by predicting in advance the distortion of the inner reflective surface 24 caused by the force supporting the inner mirror 14 with high accuracy using simulations such as a finite element method, the distortion can be compensated for with high accuracy.

### (Third Embodiment)

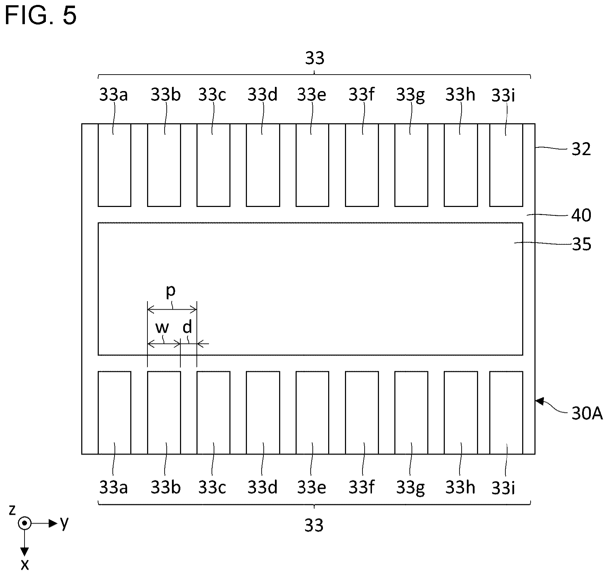

Fig. 5 is a top view schematically illustrating a configuration of a deformable mirror 30A according to a third embodiment. In the third embodiment, the reflective surface 40 of the piezoelectric substrate 32 is provided with a reflective surface electrode 33 and a reflective film 35. The reflective surface electrode 33 includes a plurality of electrodes 33a, 33b, 33c, 33d, 33e, 33f, 33g, 33h, and 33i arranged at intervals in the optical axis direction (for example, in the y direction). The present embodiment will be described with a focus on differences from the above-described embodiments, and common descriptions will be omitted where appropriate.

The deformable mirror 30A includes the piezoelectric substrate 32, the reflective surface electrode 33, the reflective film 35, the back surface electrode (see Fig. 2) 36, and the power supply 38 (see Fig. 2). The reflective surface electrode 33 and the reflective film 35 are provided on the reflective surface 40 of the piezoelectric substrate 32. The reflective film 35 is arranged at the center in the x direction of the reflective surface 40 on which the X-rays 20 are incident. The reflective film 35 functions as a total reflection mirror that totally reflects the X-rays 20. The reflective film 35 can be configured with the same material and thickness as those of the reflective surface electrode 34 according to the above-described embodiments.

The reflective surface electrode 33 is arranged along both sides of the reflective film 35 in the x direction. The reflective surface electrode 33 is arranged away from the reflective film 35 in the x direction. The reflective surface electrode 33 includes the plurality of electrodes 33a to 33i. The plurality of electrodes 33a to 33i can have the same width w, spacing d, and pitch p as those of the plurality of electrodes 36a to 36i of the back surface electrode 36 according to the above-described embodiments. The reflective surface electrode 33 can be configured with the same material and thickness as those of the reflective surface electrode 34 according to the above-described embodiments. The reflective surface electrode 33 may be configured with the same material and thickness as those of the back surface electrode 36 according to the above-described embodiments.

In the present embodiment, the back surface electrode 36 can include the plurality of electrodes 36a to 36i as in the above-described embodiments. In this case, the width w, the spacing d, and the pitch p of the plurality of electrodes 36a to 36i of the back surface electrode 36 are preferably the same as the width w, the spacing d, and the pitch p of the plurality of electrodes 33a to 33i of the reflective surface electrode 33.

In the present embodiment, the back surface electrode 36 need not include the plurality of electrodes 36a to 36i as in the above-described embodiments. In this case, the back surface electrode 36 may be uniformly formed over the entire back surface 42 (see Fig. 2) of the piezoelectric substrate 32 and function as a common electrode.

The power supply 38 is capable of applying different voltages to each of the plurality of electrodes 33a to 33i of the reflective surface electrode 33. In a case where the back surface electrode 36 includes the plurality of electrodes 36a to 36i, the power supply 38 applies a voltage between a pair of opposing electrodes (for example, a pair of the electrode 33a and the electrode 36a, a pair of the electrode 33b and the electrode 36b, and the like) of the reflective surface electrode 33 and the back surface electrode 36.

The present embodiment can also achieve the same effects as the above-described embodiments.

### (Fourth Embodiment)

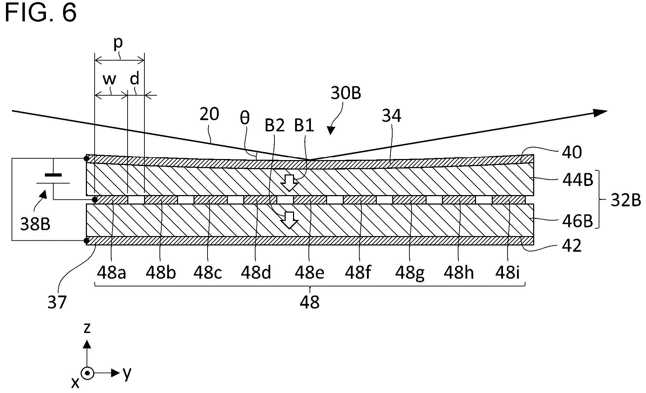

Fig. 6 is a cross-sectional view schematically illustrating a configuration of a deformable mirror 30B according to a fourth embodiment. In the fourth embodiment, an intermediate electrode 48 is further provided between a first piezoelectric layer 44B and a second piezoelectric layer 46B. The present embodiment will be described with a focus on differences from the above-described embodiments, and common descriptions will be omitted where appropriate.

The deformable mirror 30B includes a piezoelectric substrate 32B, a reflective surface electrode (or first electrode) 34, a back surface electrode (or second electrode) 37, a power supply 38B, and the intermediate electrode 48 (or third electrode). The reflective surface electrode 34 is configured in the same manner as in the above-described embodiments. The back surface electrode 37 is uniformly formed over the entire back surface 42 of the piezoelectric substrate 32B and functions as a common electrode.

The piezoelectric substrate 32B includes the first piezoelectric layer 44B and the second piezoelectric layer 46B, and the intermediate electrode 48 is provided between the first piezoelectric layer 44B and the second piezoelectric layer 46B. The first piezoelectric layer 44B and the second piezoelectric layer 46B have the same material and polarization direction. In the example illustrated in Fig. 6, a polarization direction B1 of the first piezoelectric layer 44B and a polarization direction B2 of the second piezoelectric layer 46B are both defined as the -z direction. The polarization directions B1 and B2 of the first piezoelectric layer 44B and the second piezoelectric layer 46B are not limited to those illustrated in the drawing, and may be, for example, the +z direction.

The intermediate electrode 48 includes a plurality of electrodes 48a, 48b, 48c, 48d, 48e, 48f, 48g, 48h, and 48i arranged at intervals in the optical axis direction (for example, in the y direction). The plurality of electrodes 48a to 48i can have the same width w, spacing d, and pitch p as those of the plurality of electrodes 36a to 36i of the back surface electrode 36 according to the above-described embodiments. The intermediate electrode 48 can be configured with the same material and thickness as those of the reflective surface electrode 34 and the back surface electrode 36 according to the above-described embodiments.

The intermediate electrode 48 can be formed by, for example, forming a first metal film on a bonding surface of the first piezoelectric layer 44B using a vapor deposition method or a sputtering method, forming a second metal film on a bonding surface of the second piezoelectric layer 46B, and then bonding the first metal film and the second metal film. The method for bonding the first metal film and the second metal film is not particularly limited, and any bonding technique can be used. As an example, a solid-state bonding techniques such as room-temperature bonding and diffusion bonding can be used. Alternatively, the first metal film and the second metal film may be electrically and mechanically bonded using a binder material such as a conductive adhesive or metal nanoparticles. The first metal film and the second metal film may be mechanically bonded using an insulating adhesive or an adhesive layer. The intermediate electrode 48 may be configured with a metal film formed only on the bonding surface of one of the first piezoelectric layer 44B or the second piezoelectric layer 46B. In these cases, the method for bonding the first piezoelectric layer 44B and the second piezoelectric layer 46B is not particularly limited, and an adhesive or adhesive layer of any material may be used, or a bonding method not using an adhesive may be used.

The power supply 38B applies a DC voltage not only between the reflective surface electrode 34 and the intermediate electrode 48, but also between the intermediate electrode 48 and the back surface electrode 37. In the example illustrated in Fig. 6, the power supply 38B is connected to ensure that the reflective surface electrode 34 and the back surface electrode 37 are at the same potential. Note that, in a modification, a first power supply that applies a DC voltage between the reflective surface electrode 34 and the intermediate electrode 48 and a second power supply that applies a DC voltage between the intermediate electrode 48 and the back surface electrode 37 may be used individually. That is, a first voltage applied between the reflective surface electrode 34 and the intermediate electrode 48 and a second voltage applied between the intermediate electrode 48 and the back surface electrode 37 may be controlled individually.

In the example illustrated in Fig. 6, a direction of an electric field applied to the first piezoelectric layer 44B and a direction of an electric field applied to the second piezoelectric layer 46B are reversed vertically. Since the first piezoelectric layer 44B and the second piezoelectric layer 46B have the same polarization direction, when opposite voltages are applied, the first piezoelectric layer 44B and the second piezoelectric layer 46B function like a bimorph piezoelectric element.

The present embodiment can also achieve the same effects as the above-described embodiments.

Note that, in the modification of the configuration illustrated in Fig. 6, the reflective surface electrode 33 and the reflective film 35 illustrated in Fig. 5 may be provided on the reflective surface 40 of the first piezoelectric layer 44B. That is, the reflective surface 40 of the first piezoelectric layer 44B may be provided with the plurality of electrodes 33a to 33i. Furthermore, the back surface 42 of the second piezoelectric layer 46B may be provided with the back surface electrode 36 according to the above-described embodiments. That is, the back surface 42 of the second piezoelectric layer 46B may be provided with the plurality of electrodes 36a to 36i. In this case, the intermediate electrode 48 may include the plurality of electrodes 48a to 48i or need not include the plurality of electrodes 48a to 48i. In the latter case, the intermediate electrode 48 may function as a common electrode formed over the entire bonding surfaces of the first piezoelectric layer 44B and the second piezoelectric layer 46B. The power supply 38B may be capable of applying different voltages to each of the plurality of electrodes 33a to 33i of the reflective surface electrode 33. The power supply 38B may be capable of applying different voltages to each of the plurality of electrodes 36a to 36i of the back surface electrode 36.

### (Fifth Embodiment)

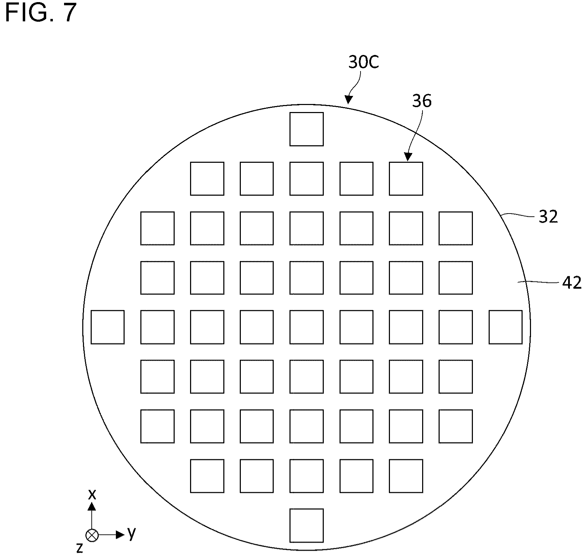

Fig. 7 is a bottom view schematically illustrating a configuration of a deformable mirror 30C according to a fifth embodiment. In the fifth embodiment, the back surface electrodes 36 are arranged in a two-dimensional array in the x and y directions. In the fifth embodiment, the shape of the reflective surface 40 can be variably controlled in two dimensions by applying different voltages to each of the back surface electrodes 36 arranged in a two-dimensional array. In the example illustrated in Fig. 7, the piezoelectric substrate 32 has a circular outer contour, but the contour of the substrate 32 is not particularly limited. The piezoelectric substrate 32 may have a rectangular outer contour.

### (Sixth Embodiment)

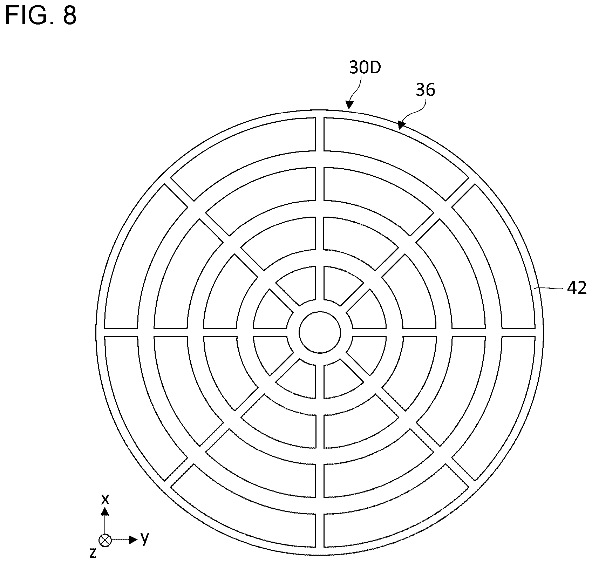

Fig. 8 is a bottom view schematically illustrating a configuration of a deformable mirror 30D according to a sixth embodiment. In the sixth embodiment, the piezoelectric substrate 32 has a circular outer contour, and the back surface electrodes 36 are arranged in a two-dimensional array in radial and circumferential directions. In the sixth embodiment as well, the shape of the reflective surface 40 can be variably controlled in two dimensions by applying different voltages to each of the back surface electrodes 36 arranged in a two-dimensional array.

### (Seventh Embodiment)

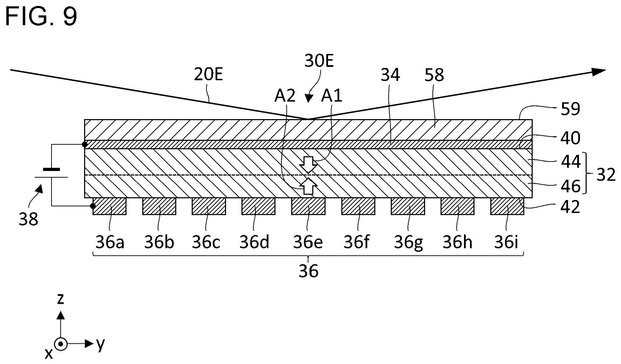

Fig. 9 is a cross-sectional view schematically illustrating a configuration of a deformable mirror 30E according to a seventh embodiment. The seventh embodiment is different from the above-described embodiments in that a multi-layered mirror 58 is further provided on the reflective surface electrode 34. The present embodiment will be described with a focus on differences from the above-described embodiments, and common descriptions will be omitted where appropriate.

The deformable mirror 30E includes the piezoelectric substrate 32, the reflective surface electrode 34, the back surface electrode 36, the power supply 38, and the multi-layered mirror 58. The multi-layered mirror 58 is structured to reflect light 20E incident on the multi-layered mirror 58 with high reflectance. In a case where the light 20E is ultraviolet light, visible light, or infrared light, the multi-layered mirror 58 may be a dielectric multi-layered film, and may be configured to ensure that the reflectance of the light 20E is greater than or equal to 99%, for example, 99.9%. The material of the dielectric multi-layered film is not particularly limited, and oxide materials such as Al₂O₃, SiO₂, and HfO₂, or fluoride materials such as LaF₃, MgF₂, and AlF₃ can be used. The thickness of the multi-layered mirror 58 is not particularly limited but is, for example, less than the thickness of the piezoelectric substrate 32. The thickness of the multi-layered mirror 58 is, for example, greater than or equal to 1 µm, greater than or equal to 5 µm, or less than or equal to 10 µm, and is, for example, less than or equal to 50 µm, less than or equal to 20 µm, or less than or equal to 10 µm.

The deformable mirror 30E includes no additional dielectric layer between the reflective surface electrode 34 and the multi-layered mirror 58. Therefore, the thickness of the dielectric material present between the reflective surface 40 of the piezoelectric substrate 32 and an upper surface 59 of the multi-layered mirror 58 is equal to the thickness of the multi-layered mirror 58. The deformable mirror 30E may include an additional dielectric layer between the reflective surface electrode 34 and the multi-layered mirror 58. As a material of the additional dielectric layer, the same material as that of the dielectric multi-layered film can be used. The thickness of the additional dielectric layer is, for example, greater than or equal to 1 µm, greater than or equal to 5 µm, or less than or equal to 10 µm, and is, for example, less than or equal to 50 µm, less than or equal to 20 µm, or less than or equal to 10 µm. In these cases, the thickness from the reflective surface 40 of the piezoelectric substrate 32 to the upper surface 59 of the multi-layered mirror 58 is less than or equal to 1 mm, and is, for example, less than or equal to 200 µm, less than or equal to 100 µm, or less than or equal to 50 µm.

### (Eighth Embodiment)

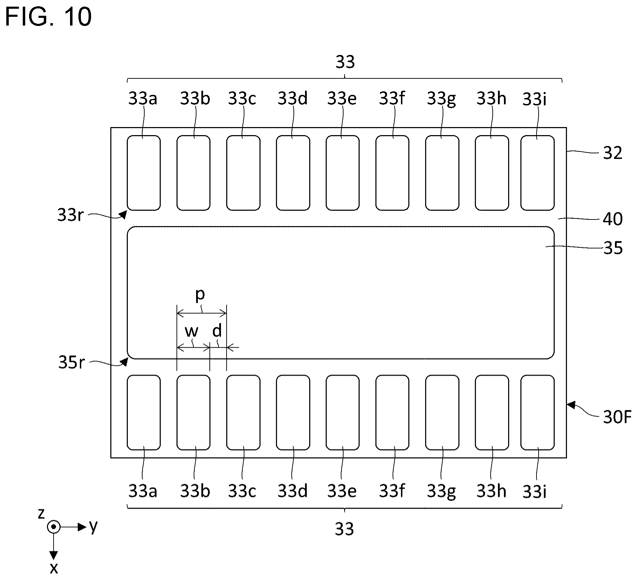

Fig. 10 is a top view schematically illustrating a configuration of a deformable mirror 30F according to an eighth embodiment. In the eighth embodiment, as in the third embodiment illustrated in Fig. 5, the reflective surface 40 of the piezoelectric substrate 32 is provided with the reflective surface electrode 33 and the reflective film 35. The eighth embodiment is different from the third embodiment in that each of the reflective surface electrode 33 and the reflective film 35 has a polygonal outer contour with rounded corners. The present embodiment will be described with a focus on differences from the above-described embodiments, and common descriptions will be omitted where appropriate.

Each of the plurality of electrodes 33a to 33i constituting the reflective surface electrode 33 has a polygonal outer contour with rounded corners 33r, and has, for example, a rectangular outer contour with the rounded corners 33r. The radius of curvature of the corners 33r of each of the electrodes 33a to 33i is, for example, greater than or equal to 1%, greater than or equal to 5%, or greater than or equal to 10% of the width w of each of the electrodes 33a to 33i in the optical axis direction (for example, in the y direction), and is less than or equal to 50%, less than or equal to 30%, or less than or equal to 20% of the width w. By rounding the corners 33r of each of the electrodes 33a to 33i constituting the reflective surface electrode 33, electric field concentration at the corners 33r can be mitigated, and discharge that may occur under high voltage application can be suppressed.

The reflective film 35 has a polygonal outer contour with rounded corners 35r, and has, for example, a rectangular outer contour with the rounded corners 35r. The radius of curvature of the corners 35r of the reflective film 35 is equal to or greater than the radius of curvature of the corners 33r of each of the electrodes 33a to 33i constituting the reflective surface electrode 33. The radius of curvature of the corners 35r of the reflective film 35 is, for example, greater than or equal to 1%, greater than or equal to 5%, or greater than or equal to 10% of the width w of each of the electrodes 33a to 33i in the optical axis direction (for example, in the y direction), and is less than or equal to 100%, less than or equal to 50%, or less than or equal to 30% of the width w. By rounding corners 35r of the reflective film 35, electric field concentration at the corners 35r can be mitigated, and discharge that may occur between the reflective surface electrode 33 and the reflective film 35 can be suppressed.

Note that, in the deformable mirrors 30, 30A, 30B, 30C, 30D, and 30E according to the other embodiments as well, at least one of the reflective surface electrodes (or first electrodes) 33 and 34, the reflective film 35, or the back surface electrodes (or second electrodes) 36 and 37 may have a polygonal or rectangular outer contour with rounded corners. For example, in the deformable mirrors 30C and 30E illustrated in Figs. 7 and 8, the corners of the back surface electrode 36 may be rounded.

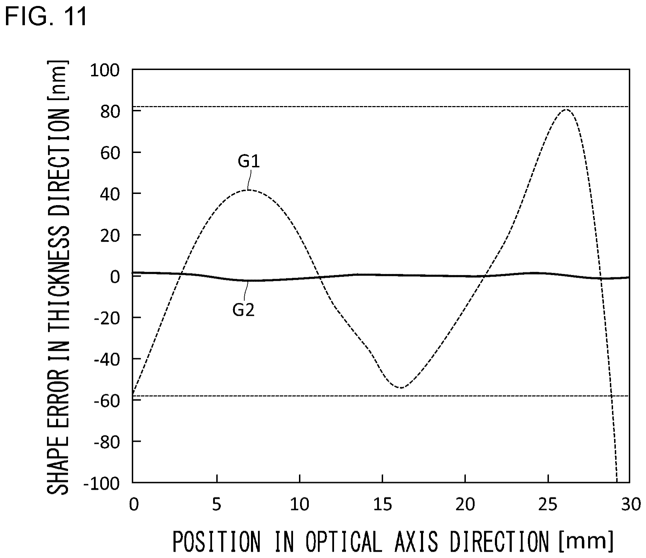

Fig. 11 is a graph showing an example of the deformation amount of the reflective surface of the deformable mirror 30F. A curve G1 indicated by a dashed line represents the surface shape of the reflective film 35 when no voltage is applied to the plurality of electrodes 33a to 33i of the deformable mirror 30F. A curve G2 indicated by a solid line represents the surface shape of the reflective film 35 when a predetermined voltage is applied to the plurality of electrodes 33a to 33i of the deformable mirror 30F. The vertical axis of the graph represents deviations from the ideal shape of the surface of the reflective film 35. The shape accuracy (PV) before voltage application represented by the curve G1 is approximately 140 nm. On the other hand, the shape accuracy (PV) after voltage application represented by the curve G2 is 3 nm, showing that a shape accuracy preferable for the X-ray mirror has been achieved.

Note that the shape accuracy illustrated in Fig. 11 can be achieved not only with the deformable mirror 30F according to the present embodiment but also with the deformable mirrors 30, 30A, 30B, 30C, 30D, and 30E according to the other embodiments.

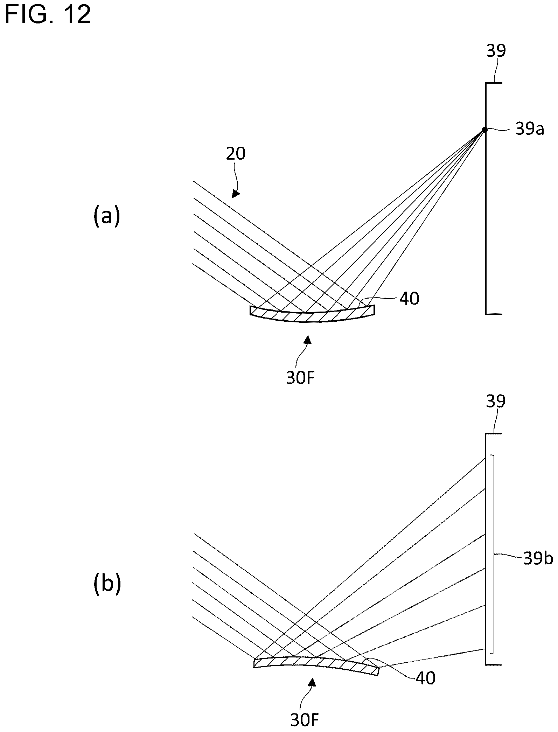

Figs. 12(a) and 12(b) are diagrams schematically illustrating an example of operation of the deformable mirror 30F. Fig. 12(a) illustrates a case where the reflective surface 40 of the deformable mirror 30F is a concave surface, and the X-rays 20 incident on the reflective surface 40 are focused onto a specific point 39a of a sample 39. Fig. 12(b) illustrates a case where the reflective surface 40 of the deformable mirror 30F is a convex surface, and the X-rays 20 incident on the reflective surface 40 are diverged toward a wide region 39b of the sample 39.

The deformable mirror 30F according to the present embodiment exhibits significant deformation of the reflective surface 40 in response to changes in the voltage applied to the plurality of electrodes 33a to 33i, so it is possible to switch between the state illustrated in Fig. 12(a) and the state illustrated in Fig. 12(b) simply by changing the voltage. In the state illustrated in Fig. 12(a), the X-rays 20 can be focused onto the specific point 39a with a beam width of approximately 200 nm. On the other hand, in the state illustrated in Fig. 12(b), the X-rays 20 can be diverged to the region 39b with a size of 1 mm or more or 10 mm or more. For example, it is possible to switch between a focusing mode in which only the specific point 39a of the sample 39 is irradiated with the X-rays 20 while the sample 39 is fixed and a diverging mode in which the wide region 39b of the sample 39 is irradiated with the X-rays 20. This allows instant switching between local and overall measurements of the sample 39, thereby improving user convenience.

Note that the example of operation illustrated in Figs. 12(a) and 12(b) can be achieved not only with the deformable mirror 30F according to the present embodiment but also with the deformable mirrors 30, 30A, 30B, 30C, 30D, and 30E according to the other embodiments.

### (Ninth Embodiment)

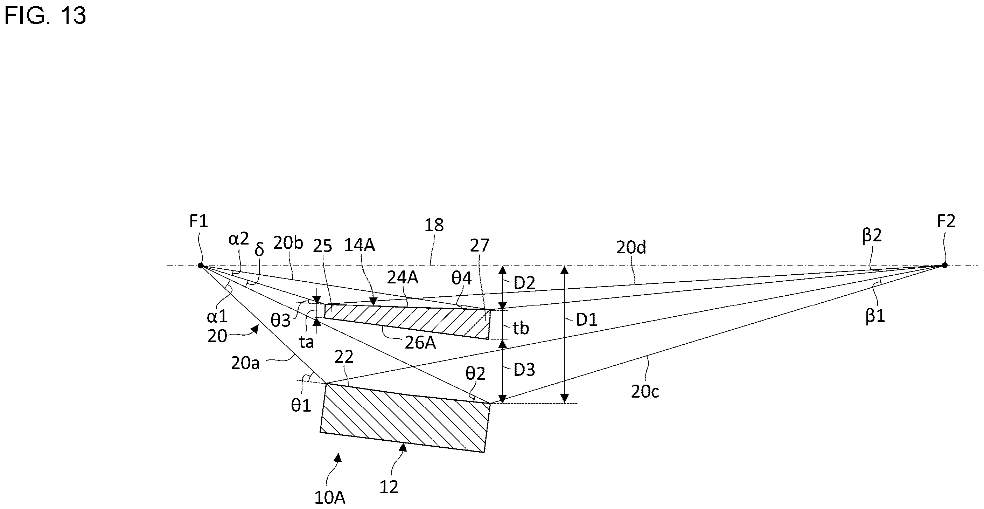

Fig. 13 is a cross-sectional view schematically illustrating a configuration of an X-ray mirror device 10A according to a ninth embodiment. The ninth embodiment is different from the X-ray mirror device 10 illustrated in Fig. 1 in that the thickness of an inner mirror 14A varies in a tapered manner in the optical axis direction. Hereinafter, the present embodiment will be described with a focus on differences from the above-described embodiments, and common descriptions will be omitted where appropriate.

The X-ray mirror device 10A includes an outer mirror 12 and an inner mirror 14A. The outer mirror 12 is configured in the same manner as in the above-described embodiments. The inner mirror 14A includes an inner reflective surface 24A and a back surface 26A. The inner reflective surface 24A may be configured in the same manner as the inner reflective surface 24 of the above-described embodiments.

The inner mirror 14A has a first end 25 located on the incident side of the X-rays 20 (first focal point F1 side) and a second end 27 located on the exit side of the X-rays 20 (second focal point F2 side). The inner mirror 14A extends along the optical axis 18 from the first end 25 to the second end 27. The inner mirror 14A is structured to ensure that a thickness ta of the first end 25 is different from a thickness tb of the second end 27, and the thickness varies in a tapered manner from the first end 25 to the second end 27. The thickness of the inner mirror 14A monotonically increases or decreases in the optical axis direction. In the example illustrated in Fig. 13, the thickness ta of the first end 25 is less than the thickness tb of the second end 27, and the thickness monotonically increases from the first end 25 to the second end 27. In an example different from the example illustrated in Fig. 13, the thickness ta of the first end 25 may be greater than the thickness tb of the second end 27, and the thickness may monotonically decrease from the first end 25 to the second end 27.

According to the present embodiment, by varying the thickness of the inner mirror 14A in a tapered manner, the thickness ta of the first end 25 or the thickness tb of the second end 27 can be reduced compared to a case where the thickness is constant. As a result, an angular range δ of the X-rays 20 that cannot be effectively utilized due to shielding by the inner mirror 14A can be reduced, thereby allowing an increase in the first angular range α1. The angular range δ that cannot be effectively utilized is, for example, a range between the first angular range α1 and the second angular range α2. This enables a further increase in the numerical aperture of the X-ray mirror device 10A and an increase in the spatial resolution.

In the example illustrated in Fig. 13, since the distance from the X-ray mirror device 10A to the first focal point F1 is shorter than the distance to the second focal point F2, angular ranges α1 and α2 of X-ray beams 20a and 20b incident on the X-ray mirror device 10A are relatively large, and angular ranges β1 and β2 of X-ray beams 20c and 20d exiting the X-ray mirror device 10A are relatively small. In such a case, a space between the X-ray beam 20a incident on the outer mirror 12 and the X-ray beam 20b incident on the inner mirror 14A is particularly limited. On the other hand, a relatively large space is present between the X-ray beam 20c exiting the outer mirror 12 and the X-ray beam 20d exiting the inner mirror 14A. In the example illustrated in Fig. 13, reducing the thickness ta of the first end 25 prevents the X-ray beam 20a within the first angular range α1 from being shielded by the inner mirror 14A, which contributes to an increase in the numerical aperture of the X-ray mirror device 10A. Furthermore, increasing the thickness tb of the second end 27 enables an increase in the mechanical strength of the inner mirror 14A.

Note that, in contrast to the example illustrated in Fig. 13, in a case where the distance from the X-ray mirror device 10A to the second focal point F2 is shorter than the distance to the first focal point F1, the thickness ta of the first end 25 can be increased, and the thickness tb of the second end 27 can be reduced. This enables the achievement of both an increase in the numerical aperture of X-ray mirror device 10A and an increase in the mechanical strength of inner mirror 14A.

### (Tenth Embodiment)

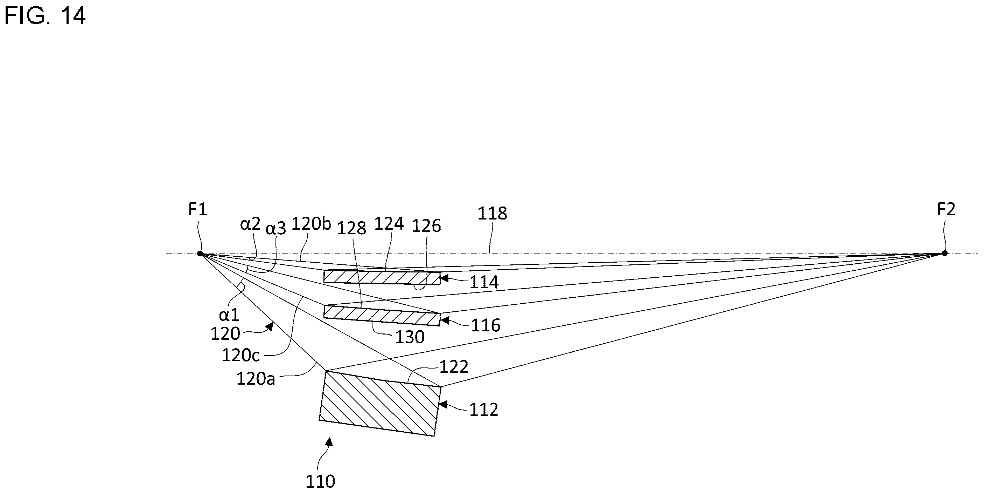

Fig. 14 is a cross-sectional view schematically illustrating a configuration of an X-ray mirror device 110 according to a tenth embodiment. The X-ray mirror device 110 includes an outer mirror (or first mirror) 112, an inner mirror (or second mirror) 114, and an intermediate mirror 116 (or third mirror). The tenth embodiment is different from the first embodiment described above in that the intermediate mirror 116 is further provided between the outer mirror 112 and the inner mirror 114. Hereinafter, the tenth embodiment will be described with a focus on differences from the above-described embodiments, and common description will be omitted where appropriate.

The outer mirror 112 has an outer reflective surface (or first reflective surface) 122 on which X-rays 120 are incident at a grazing angle. The outer reflective surface 122 reflects an X-ray beam 120a within the first angular range α1 from the first focal point F1 toward the second focal point F2. The outer mirror 112 may be configured in the same manner as the outer mirror 12 according to the first embodiment described above.

The inner mirror 114 has an inner reflective surface (or second reflective surface) 124 on which the X-rays 120 are incident at a grazing angle and an opposite surface (or back surface) 126 to the inner reflective surface 124. The inner reflective surface 124 reflects an X-ray beam 120b within the second angular range α2 from the first focal point F1 toward the second focal point F2. The inner mirror 114 may be configured in the same manner as the inner mirror 14 according to the first embodiment described above.

The intermediate mirror 116 has an intermediate reflective surface (or third reflective surface) 128 on which the X-rays 120 are incident at a grazing angle and an opposite surface (or back surface) 130 to the intermediate reflective surface 128. The intermediate reflective surface 128 reflects an X-ray beam 120c within the third angular range α3 from the first focal point F1 toward the second focal point F2. The third angular range α3 is different from the first angular range α1 and the second angular range α2. The intermediate mirror 116 is arranged between the outer mirror 112 and the inner mirror 114. The intermediate reflective surface 128 of the intermediate mirror 116 faces the inner mirror 114. The back surface 130 of the intermediate mirror 116 faces the outer mirror 112.

Like the inner mirror 114, due to space constraints for installation, the intermediate mirror 116 needs to have a reduced thickness. Like the inner mirror 114, the intermediate reflective surface 128 of the intermediate mirror 116 preferably has a shape accuracy (PV) of 10 nm or less, or 5 nm or less. Configuring the intermediate mirror 116 in the same manner as the inner mirror 114 enables the achievement of both an extremely thin thickness and high shape accuracy of the intermediate reflective surface 128. As the intermediate mirror 116, for example, the deformable mirrors 30, 30A, and 30B illustrated in Fig. 2, 5, or 6 can be used.

According to the present embodiment, by adopting a nested structure combining three mirrors for the X-ray mirror device 110, the sum of the angular ranges α1, α2, and α3 of the X-rays 120 (which corresponds to the numerical aperture) exiting the first focal point F1 at which the X-ray mirror device 110 can focus can be increased. This enables an increase in the spatial resolution, achieving, for example, a spatial resolution of 10 nm or less, or 5 nm or less.

In a modification, a plurality of intermediate mirrors may be arranged between the outer mirror 112 and the inner mirror 114. Furthermore, the deformable mirrors 30, 30A, and 30B can be used as the plurality of intermediate mirrors arranged between the outer mirror 112 and the inner mirror 114. This enables, for each of the plurality of intermediate mirrors, the achievement of both an extremely thin thickness and high shape accuracy of the reflective surface.

In a modification, like the inner mirror 14A illustrated in Fig. 13, the thickness of at least one of the inner mirror 114 or the intermediate mirror 116 may be varied in a tapered manner. Only the thickness of the inner mirror 114 may be varied in a tapered manner, only the thickness of the intermediate mirror 116 may be varied in a tapered manner, or the thicknesses of both the inner mirror 114 and the intermediate mirror 116 may be varied in a tapered manner. Furthermore, the thicknesses of the plurality of intermediate mirrors arranged between the outer mirror 112 and the inner mirror 114 may be varied in a tapered manner.

### (Eleventh Embodiment)

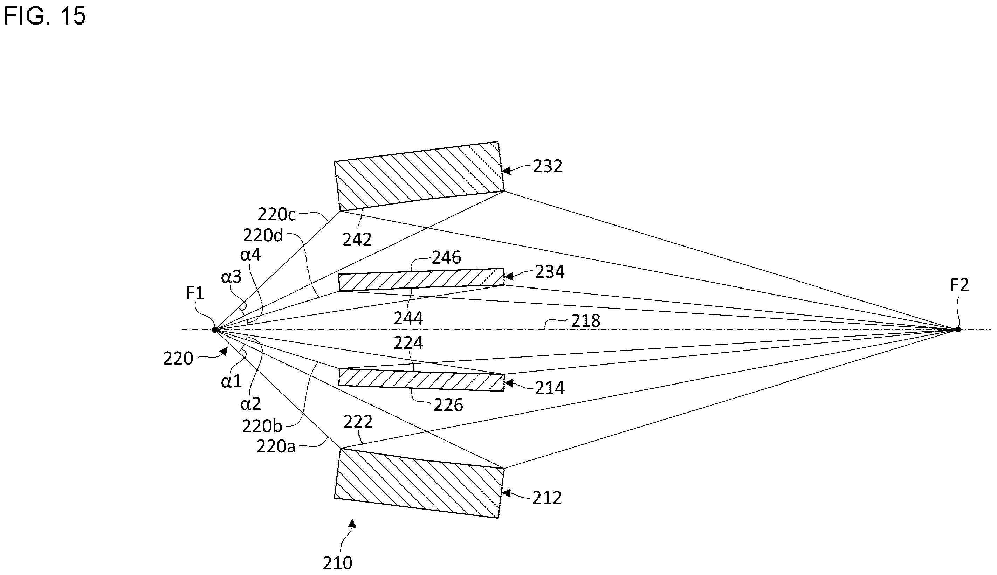

Fig. 15 is a cross-sectional view schematically illustrating a configuration of an X-ray mirror device 210 according to an eleventh embodiment. The X-ray mirror device 210 includes a first outer mirror (or first mirror) 212, a first inner mirror (or second mirror) 214, a second outer mirror (or fourth mirror) 232, and a second inner mirror (or fifth mirror) 234. The eleventh embodiment is different from the above-described embodiments in that the outer mirror and the inner mirror are arranged on opposite sides of an optical axis 218. Hereinafter, the eleventh embodiment will be described with a focus on differences from the above-described embodiments, and common descriptions will be omitted where appropriate.

The first outer mirror 212 has a first outer reflective surface (or first reflective surface) 222 on which X-rays 220 are incident at a grazing angle. The first outer reflective surface 222 reflects an X-ray beam 220a within the first angular range α1 from the first focal point F1 toward the second focal point F2. The first outer mirror 212 may be configured in the same manner as the outer mirror 12 according to the first embodiment described above.

The first inner mirror 214 has a first inner reflective surface (or second reflective surface) 224 on which the X-rays 220 are incident at a grazing angle and an opposite surface (or first back surface) 226 to the first inner reflective surface 224. The first inner reflective surface 224 reflects an X-ray beam 220b within the second angular range α2 from the first focal point F1 toward the second focal point F2. The first inner mirror 214 may be configured in the same manner as the inner mirror 14 according to the first embodiment described above.

The second outer mirror 232 is arranged on the opposite side of the optical axis 218 from the first outer mirror 212. The second outer mirror 232 can be arranged in a position symmetrical to the first outer mirror 212 across the optical axis 218. The second outer mirror 232 has a second outer reflective surface 242 (or fourth reflective surface) on which the X-rays 220 are incident at a grazing angle. The second outer reflective surface 242 reflects an X-ray beam 220c within the third angular range α3 from the first focal point F1 toward the second focal point F2. The second outer reflective surface 242 may have a shape symmetrical to the first outer reflective surface 222 across the optical axis 218. In this case, the third angular range α3 is an angular range symmetrical to the first angular range α1 across the optical axis 218. The second outer mirror 232 may be configured in the same manner as the outer mirror 12 according to the first embodiment described above.

The second inner mirror 234 is arranged on the opposite side of the optical axis 218 from the first inner mirror 214. The second inner mirror 234 can be arranged in a position symmetrical to the first inner mirror 214 across the optical axis 218. The second inner mirror 234 is arranged between the optical axis 218 and the second outer mirror 232. The second inner mirror 234 has a second inner reflective surface (or fifth reflective surface) 244 on which the X-rays 220 are incident at a grazing angle and an opposite surface (or second back surface) 246 to the second inner reflective surface 244. The second back surface 246 faces the second outer mirror 232. The second inner reflective surface 244 faces the first inner reflective surface 224. The second inner reflective surface 244 reflects an X-ray beam 220d within a fourth angular range α4 from the first focal point F1 toward the second focal point F2. The second inner reflective surface 244 may have a shape symmetrical to the first inner reflective surface 224 across the optical axis 218. In this case, the fourth angular range α4 is an angular range symmetrical to the second angular range α2 across the optical axis 218. The second inner mirror 234 may be configured in the same manner as the inner mirror 14 according to the first embodiment described above.

According to the present embodiment, by arranging additional outer and inner mirrors on the opposite sides of the optical axis, the sum of the angular ranges α1, α2, α3, and α4 of the X-rays 220 (which corresponds to the numerical aperture) from the first focal point F1 at which the X-ray mirror device 210 can focus can be increased. This enables an increase in the spatial resolution, achieving, for example, a spatial resolution of 10 nm or less, or 5 nm or less.

In a modification, like the inner mirror 14A illustrated in Fig. 13, the thicknesses of the first inner mirror 214 and the second inner mirror 234 may be varied in a tapered manner.

In a modification, at least one first intermediate mirror (or sixth mirror) may be arranged between the first outer mirror 212 and the first inner mirror 214. Furthermore, at least one second intermediate mirror (or seventh mirror) may be arranged between the second outer mirror 232 and the second inner mirror 234. At least one second intermediate mirror may be arranged symmetrically to at least one first intermediate mirror across the optical axis 218. The first intermediate mirror and the second intermediate mirror may be configured in the same manner as the intermediate mirror 216 according to the tenth embodiment illustrated in Fig. 14. In a modification, like the inner mirror 14A illustrated in Fig. 13, the thicknesses of the first inner mirror 214 and the second inner mirror 234 may be varied in a tapered manner, and the thicknesses of the first intermediate mirror and the second intermediate mirror may be varied in a tapered manner.

### (Twelfth Embodiment)

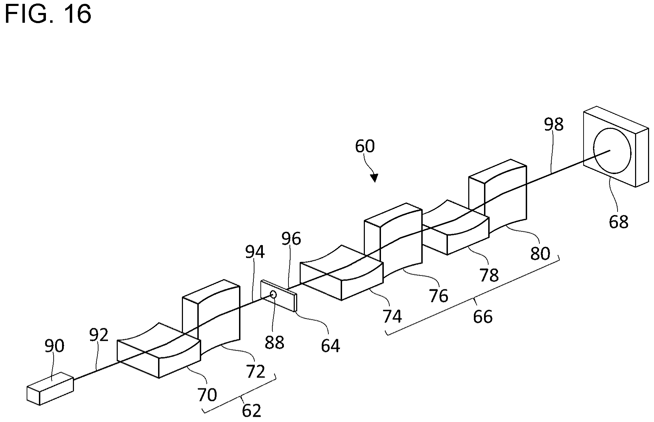

Fig. 16 is a perspective view schematically illustrating a configuration of an X-ray device 60 according to a twelfth embodiment. The X-ray device 60 is an example of the optical device using X-rays, and is an X-ray microscope having a so-called full-field (imaging) microscope configuration. The X-ray device 60 includes an illumination optical system 62, a sample holder 64, an imaging optical system 66, and an X-ray detector 68. The X-ray device 60 is structured to irradiate a sample 88 with X-rays 92 generated by an X-ray source 90 and cause the X-ray detector 68 to detect a magnified image of the X-rays 96 transmitted through the sample 88.

The X-ray source 90 generates the X-rays 92 for observing the sample 88. The type of the X-ray source 90 is not particularly limited, and an X-ray tube, a large-scale synchrotron radiation facility such as SPring-8, an X-ray free electron laser, or the like can be used. In a case where a small-scale device such as an X-ray tube is used as the X-ray source, the X-ray device 60 may include the X-ray source 90. On the other hand, in a case where a large-scale device such as a synchrotron radiation facility is used as the X-ray source 90, the X-ray device 60 need not include the X-ray source 90. The X-ray source 90 is structured to output hard X-rays of 2 keV or more, for example. The X-ray source 90 may generate monochromatic X-rays monochromatized to a specific wavelength, or may generate continuous X-rays (white X-rays) containing various wavelength components.

The illumination optical system 62 is arranged between the X-ray source 90 and the sample holder 64. The illumination optical system 62 is structured to focus the X-rays 92 from the X-ray source 90 onto the sample holder 64. The illumination optical system 62 is configured with a so-called Kirkpatrick-Baez (KB) mirror, and includes a horizontal concave mirror 70 and a vertical concave mirror 72. The horizontal concave mirror 70 and the vertical concave mirror 72 are arranged to ensure that the directions normal to their respective reflective surfaces are orthogonal to each other. The reflective surfaces of the horizontal concave mirror 70 and the vertical concave mirror 72 are each configured with, for example, an elliptical concave surface having a focal point at the position of the sample holder 64. The illumination optical system 62 may include, like the imaging optical system 66 to be described later, four curved mirrors.

The sample holder 64 holds the sample 88 irradiated with X-rays 94 exiting the illumination optical system 62. The sample holder 64 holds the sample 88 to be observed on the optical path of the X-rays 94. The configuration of the sample holder 64 is not particularly limited, and any configuration for fixing the position of the sample 88 can be used, depending on the characteristics of the sample 88. The sample holder 64 includes, for example, a stage device for adjusting the position of the sample 88 relative to the optical path of the X-rays 94.

The imaging optical system 66 is arranged between the sample holder 64 and the X-ray detector 68. The imaging optical system 66 is structured to form an image of X-rays 96 from the sample holder 64 onto the X-ray detector 68. The imaging optical system 66 is a so-called Advanced Kirkpatrick-Baez (AKB) mirror optical system, and includes four curved mirrors 74, 76, 78, and 80. The imaging optical system 66 is structured to achieve, for example, an image magnification of approximately 100 times to 1000 times.

The imaging optical system 66 can be configured, for example, as a Wolter-I mirror including a combination of a hyperbolic concave mirror and an elliptical concave mirror. In this case, the first curved mirror 74 is a horizontal hyperbolic concave mirror, and has, for example, a reflective surface configured with a hyperbolic concave surface having a focal point at the position of the sample holder 64. The second curved mirror 76 is a vertical hyperbolic concave mirror, and has, for example, a reflective surface configured with a hyperbolic concave surface having a focal point at the position of the sample holder 64. The third curved mirror 78 is a horizontal elliptical concave mirror, and has, for example, a reflective surface configured with an elliptical concave surface having a first focal point at the position of the X-ray detector 68 and a second focal point shared with the first curved mirror 74. The fourth curved mirror 80 is a vertical elliptical concave mirror, and has, for example, a reflective surface configured with an elliptical concave surface having a first focal point at the position of the X-ray detector 68 and a second focal point shared with the second curved mirror 76.

In the example illustrated in Fig. 16, the four curved mirrors 74 to 80 are arranged in the order of the horizontal hyperbolic concave mirror, the vertical hyperbolic concave mirror, the horizontal elliptical concave mirror, and the vertical elliptical concave mirror from the sample holder 64 toward the X-ray detector 68, but the arrangement order is not limited thereto. For example, the horizontal elliptical concave mirror may be arranged next to the horizontal hyperbolic concave mirror, or the vertical elliptical concave mirror may be arranged next to the vertical hyperbolic concave mirror. Furthermore, the imaging optical system 66 can also be configured as a Wolter-III mirror including a combination of an elliptical concave mirror and a hyperbolic convex mirror. In this case, the first curved mirror 74 can be a horizontal elliptical concave mirror, the second curved mirror 76 can be a vertical elliptical concave mirror, the third curved mirror 78 can be a horizontal hyperbolic convex mirror, and the fourth curved mirror 80 can be a vertical hyperbolic convex mirror.

The X-ray detector 68 detects X-rays 98 exiting the imaging optical system 66. The X-ray detector 68 is, for example, an X-ray camera that detects a two-dimensional image of the X-rays 98. The configuration of the X-ray detector 68 is not particularly limited, and a direct or indirect conversion image sensor (CCD or CMOS sensor) may be used, for example. To further increase the resolution, the X-ray detector 68 may include an optical element such as a lens for magnifying a visible light image obtained through conversion by a scintillator, and an image sensor that captures the magnified visible light image.

At least one of the illumination optical system 62 or the imaging optical system 66 can include the X-ray mirror device 10, 10A, 110, or 210 according to the above-described embodiments or modifications.

At least one of the horizontal concave mirror 70 and the vertical concave mirror 72 constituting the illumination optical system 62 may include the X-ray mirror device 10, 10A, 110, or 210. The X-ray mirror device 10, 10A, 110, or 210 may be applied only to the horizontal concave mirror 70, only to the vertical concave mirror 72, or to both the horizontal concave mirror 70 and the vertical concave mirror 72.

At least one of the four curved mirrors 74 to 80 constituting the imaging optical system 66 may include the X-ray mirror device 10, 10A, 110, or 210. The X-ray mirror device 10, 10A, 110, or 210 may be applied to any one, two, three, or all of the four curved mirrors 74 to 80. Using the X-ray mirror device 10, 10A, 110, or 210 in at least one of the illumination optical system 62 or the imaging optical system 66 enables an improvement in the characteristics of the X-ray optical system and an increase in the spatial resolution.

The X-ray mirror device 10, 10A, 110, or 210 according to the present disclosure is preferably applied to the imaging optical system 66 that requires a higher numerical aperture. In particular, the X-ray mirror device 10, 10A, 110, or 210 is preferably applied to both the horizontal curved mirror and the vertical curved mirror that are arranged near the sample holder 64 and serve as the objective lens of the imaging optical system 66. The configuration illustrated in Fig. 16 is preferably applied to the first curved mirror 74 that is a horizontal hyperbolic concave mirror, the second curved mirror 76 that is a vertical hyperbolic concave mirror, or both. This is because, to increase the resolution of the imaging optical system 66, it is necessary to increase the numerical aperture of the imaging optical system 66. Applying the X-ray mirror device 10, 10A, 110, or 210 to the curved mirror serving as the objective lens of the X-ray optical system enables an effective increase in the spatial resolution of the X-ray device 60.

Like the illumination optical system 62, the imaging optical system 66 may include a KB mirror including a horizontal concave mirror and a vertical concave mirror. In this case, using the X-ray mirror device 10, 10A, 110, or 210 in at least one of the horizontal concave mirror or the vertical concave mirror enables an improvement in the characteristics of the imaging optical system 66 and an increase in the spatial resolution of the X-ray device 60.

The X-ray device 60 may further include an X-ray spectrometer (not illustrated) arranged between the X-ray source 90 and the illumination optical system 62. The X-ray spectrometer is structured to monochromatize the X-rays 92 exiting the X-ray source 90. The X-ray spectrometer may be a crystal spectrometer such as a double-crystal monochromator, and may be structured to vary the X-ray wavelength by changing the crystal angle. The X-ray device 60 can provide X-ray absorption fine structure (XAFS) imaging by changing the X-ray wavelength. The X-ray device 60 includes an X-ray optical system with low chromatic aberration, which makes it possible to provide a high-resolution XAFS image (for example, with a resolution of 10 nm or less or 5 nm or less) by simply changing the X-ray wavelength.

The X-ray mirror device 10, 10A, 110, or 210 according to the present disclosure can be applied to any X-ray device, specifically to X-ray optical systems such as a focusing optical system and an imaging optical system included in an X-ray device. Examples of the X-ray device include not only the imaging X-ray microscope illustrated in Fig. 16 but also a scanning X-ray microscope and an X-ray telescope.

The scanning X-ray microscope may include a focusing optical system that focuses X-rays onto the sample holder, and at least one of X-ray mirrors constituting the focusing optical system may be the X-ray mirror device 10, 10A, 110, or 210 according to the present disclosure. In a case of the scanning X-ray microscope, the resolution is determined on the basis of the beam size of the X-rays focused by the focusing optical system. Using the X-ray mirror device 10, 10A, 110, or 210 according to the present disclosure enables an improvement in the characteristics of the focusing optical system and an increase in the resolution of the scanning X-ray microscope. As the focusing optical system of the scanning X-ray microscope, the horizontal concave mirror 70 and the vertical concave mirror 72 similar to those of the illumination optical system 62 illustrated in Fig. 16 can be used, and the X-ray mirror device 10, 10A, 110, or 210 according to the present disclosure can be used as at least one of the horizontal concave mirror 70 or the vertical concave mirror 72. An AKB mirror optical system including four curved mirrors can be used as the focusing optical system of the scanning X-ray microscope, and the X-ray mirror device 10, 10A, 110, or 210 according to the present disclosure can be used as at least one of the four curved mirrors.

The X-ray telescope may include an imaging optical system that forms an image of X-rays from an astronomical object under observation onto the X-ray detector, and at least one of X-ray mirrors constituting the imaging optical system may be the X-ray mirror device 10, 10A, 110, or 210 according to the present disclosure. As the imaging optical system of the X-ray telescope, for example, an AKB mirror optical system similar to the imaging optical system 66 illustrated in Fig. 16 can be used. In a case where the sample 88 illustrated in Fig. 16 is regarded as an astronomical object under observation, a Wolter-I imaging optical system in which the first curved mirror 74 and the second curved mirror 76 are parabolic concave mirrors and the third curved mirror 78 and the fourth curved mirror 80 are hyperbolic concave mirrors can be used. Alternatively, a Wolter-III imaging optical system in which the first curved mirror 74 and the second curved mirror 76 are parabolic convex mirrors and the third curved mirror 78 and the fourth curved mirror 80 are elliptical concave mirrors can be used. Using the Wolter-III imaging optical system makes it easier to secure a sufficient distance from the optical axis to the elliptical concave mirror, thereby making it easier to arrange the inner mirror between the optical axis and the outer mirror. In these cases, the X-ray mirror device 10, 10A, 110, or 210 according to the present disclosure can be used as at least one of the four curved mirrors.

The X-ray mirror device 10, 10A, 110, or 210 according to the present disclosure may be used as a wavefront compensating optical element in any X-ray device. In a case where the wavefront compensating optical element is used, the reflective surface, which is substantially flat, is slightly deformed, for example, into a shape opposite to the wavefront aberration of obliquely incident X-rays, to compensate for the wavefront aberration of the incident X-rays. X-rays in which the wavefront aberration has been compensated for by the X-ray mirror device 10, 10A, 110, or 210 may be further processed by an X-ray optical element such as a lens or a mirror, may be applied to the sample held by the sample holder, or may be detected by the X-ray detector.

The X-ray mirror device 10, 10A, 110, or 210 according to the present disclosure may be applied to a photolithography device that utilizes X-rays. The photolithography device includes, for example, an illumination optical system for irradiating a pattern mask with X-rays from an X-ray source and an imaging optical system for forming an image of the X-rays patterned by the pattern mask onto a sample such as a wafer. The X-ray mirror device 10, 10A, 110, or 210 according to the present disclosure can be applied to at least one of the illumination optical system or the imaging optical system of the photolithography device.

The deformable mirrors 30, 30A, 30B, 30C, 30D, or 30E according to the present disclosure can be used as a wavefront compensating optical element for compensating for wavefront aberration of laser light. For example, it can be used as a wavefront compensating optical element for ultra-high-intensity laser used in laser nuclear fusion.

### (Thirteenth Embodiment)

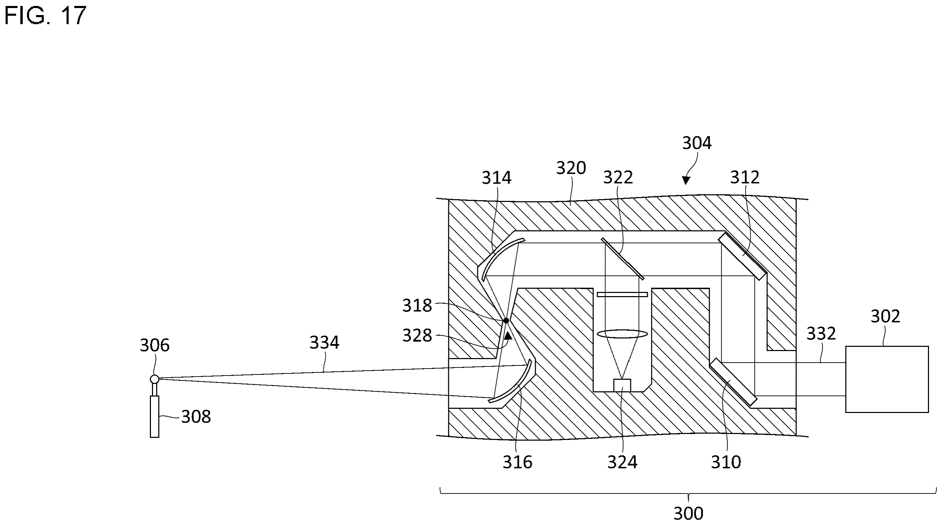

Fig. 17 is a diagram schematically illustrating a configuration of an optical device 300 according to a thirteenth embodiment. The optical device 300 includes a laser light source 302 and an irradiation optical system 304. The optical device 300 is used to irradiate a fuel capsule 306 held by a sample holder 308 with laser light 332 supplied from the laser light source 302 to induce nuclear fusion in the fuel capsule 306. The fuel capsule 306 contains, for example, deuterium and tritium as fuel. When deuterium and tritium undergo nuclear fusion, helium and fast neutrons (about 10.6MeV) are generated, and electricity is generated by utilizing thermal energy extracted from the fast neutrons.

The laser light source 302 is structured to output high-intensity laser light having a peak output of, for example, 1 TW (10¹² W) or more or 1 PW (10¹⁵ W) or more. The output wavelength of the laser light source 302 is not particularly limited, and the laser light source 302 is structured to output near-infrared light with a wavelength such as 1053 nm or 1064 nm, or harmonics of near-infrared light (the second harmonic, the third harmonic, or the fourth harmonic), for example. The laser light source 302 is a pulse laser, and outputs the laser light 332 having a pulse width of 10 ns or less, 1 ns or less, 100 ps or less, or 10 ps or less. The laser light 332 has a pulse energy of, for example, 100 J or more, 1 kJ or more, 10 kJ or more, 100 kJ or more, or 1 MJ or more. The laser light 332 supplied from the laser light source 302 to the irradiation optical system 304 has a beam diameter of, for example, 10 cm or more, 30 cm or more, 50 cm or more, 80 cm or more, or 100 cm or more.

The irradiation optical system 304 includes a first folding mirror 310, a second folding mirror 312, a steering mirror 314, and a focusing mirror 316. The laser light 332 from the laser light source 302 is reflected by the first folding mirror 310 and the second folding mirror 312, and then incident on the steering mirror 314. The steering mirror 314 focuses the laser light onto an intermediate focal point 318 located between the steering mirror 314 and the focusing mirror 316. The focusing mirror 316 reflects the laser light from the intermediate focal point 318 and focuses the laser light onto the fuel capsule 306. The steering mirror 314 is, for example, a parabolic mirror, and the focusing mirror 316 is, for example, an elliptical mirror. The steering mirror 314 and the focusing mirror 316 are examples of the focusing optical element that focuses the laser light 332. The focusing optical element is not limited to a reflective type and may be a transmissive optical element such as a lens.

The optical elements (the first folding mirror 310, the second folding mirror 312, the steering mirror 314, and the focusing mirror 316) included in the irradiation optical system 304 each have a size corresponding to the beam diameter of the laser light 332. The size of each optical element included in the irradiation optical system 304 is greater than or equal to the beam diameter of the laser light 332, and is, for example, at least 20% greater than the beam diameter. Each optical element included in the irradiation optical system 304 has a size of, for example, 10 cm or more, 15 cm or more, 30 cm or more, 40 cm or more, 50 cm or more, 60 cm or more, 80 cm or more, or 100 cm or more.

The irradiation optical system 304 is arranged inside a housing 320 for shielding fast neutrons flying from the fuel capsule 306. The irradiation optical system 304 may include the housing 320. A folded optical path through which the laser light 332 passes is provided inside the housing 320. Near the intermediate focal point 318, a constricted path 328 having an optical path width narrower than elsewhere is formed. The constricted path 328 functions as a neutron filter for shielding fast neutrons. By forming the constricted path 328, it is possible to prevent the steering mirror 314, the second folding mirror 312, and the first folding mirror 310 located upstream of the constricted path 328 from being directly irradiated with fast neutrons.

On the other hand, it is difficult to prevent the focusing mirror 316 located downstream of the constricted path 328 from being directly irradiated with fast neutrons. Therefore, the surface of the focusing mirror 316 is prone to damage caused by fast neutron irradiation, and the surface shape accuracy required to focus laser light 334 onto the fuel capsule 306 with high precision cannot be maintained. In other words, the damage to the surface of the focusing mirror 316 causes distortion of the wavefront of the laser light 334, leading to a decrease in the focusing accuracy of the laser light 334. To compensate for such distortion of the wavefront of the laser light 334, at least one of the first folding mirror 310 or the second folding mirror 312 can be used as a wavefront compensating optical element. That is, the deformable mirror 30, 30A, 30B, 30C, 30D, 30E, or 30F according to the above-described embodiments can be used as at least one of the first folding mirror 310 or the second folding mirror 312.

The irradiation optical system 304 may further include a beam splitter 322 arranged between the second folding mirror 312 and the steering mirror 314, and a detector 324 that detects light reflected by the beam splitter 322. The beam splitter 322 is arranged to guide return light from the fuel capsule 306 to the detector 324. The detector 324 measures damage to the surface of focusing mirror 316 by detecting light that has traveled from fuel capsule 306 via the focusing mirror 316 and the steering mirror 314. The measurement result of the detector 324 can be used to control wavefront compensation at at least one of the first folding mirror 310 or the second folding mirror 312.

The irradiation optical system 304 includes a deformable mirror (at least one of the first folding mirror 310 or the second folding mirror 312) that reflects the laser light 332 supplied from the laser light source 302, and the focusing mirror 316 that focuses the laser light reflected by the deformable mirror toward the fuel capsule 306 held by the sample holder 308. At least one of the first folding mirror 310 or the second folding mirror 312 can be configured in the same manner as the deformable mirror 30, 30A, 30B, 30C, 30D, 30E, or 30F according to the above-described embodiments. By using a piezoelectric single-crystal material such as LN or LT as the deformable mirror, the occurrence of hysteresis or drift can be suppressed, and the shape of the reflective surface can be uniquely determined on the basis of the applied voltage. Therefore, the distortion of the wavefront of the laser light 334 with which the fuel capsule 306 is irradiated can be compensated for with high accuracy, and the impact of the damage to the surface of the focusing mirror 316 can be mitigated. As a result, the maintenance cycle of the focusing mirror 316 can be extended, contributing to the achievement of a laser nuclear fusion reactor capable of stable operation over a long period.

### (Fourteenth Embodiment)

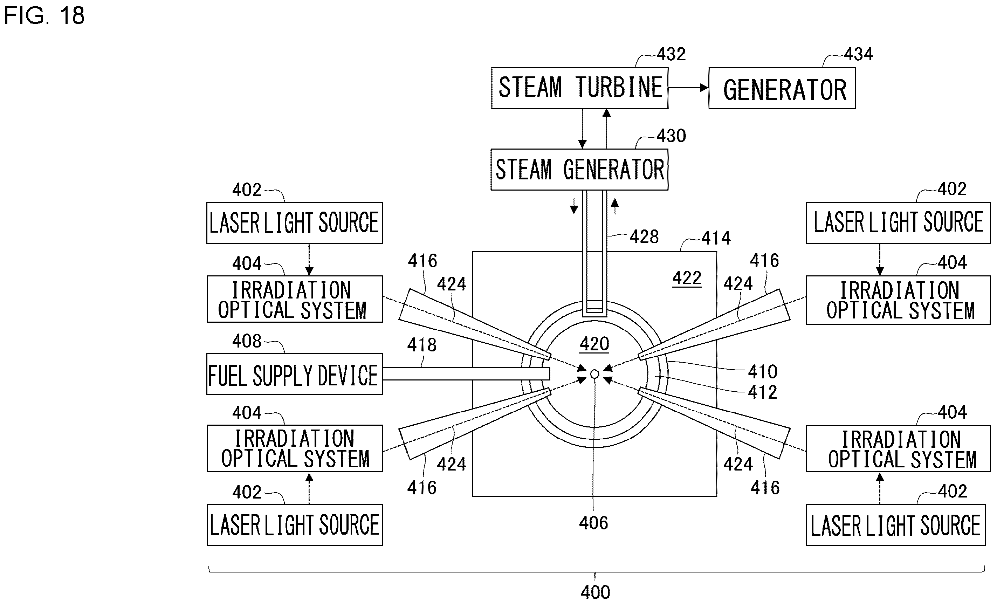

Fig. 18 is a diagram schematically illustrating a configuration of a laser nuclear fusion reactor 400 according to a fourteenth embodiment. The laser nuclear fusion reactor 400 includes a laser light source 402, an irradiation optical system 404, a fuel supply device 408, a reaction vessel 410, a blanket 412, a containment vessel 414, a laser inlet 416, and a fuel inlet 418.

The laser light source 402 and the irradiation optical system 404 can be configured in the same manner as the laser light source 302 and the irradiation optical system 304 described above. Laser light 424 output from the irradiation optical system 404 is introduced into an internal space 420 of the reaction vessel 410 through the laser inlet 416. The laser light 424 is applied to a fuel capsule 406 introduced into the internal space 420 of the reaction vessel 410. In the example illustrated in Fig. 18, the fuel capsule 306 is irradiated with the laser light 424 from four directions using four laser light sources 402 and four irradiation optical systems 404, but the number of irradiation beams of the laser light 424 is not particularly limited, and may be three or less, or five or more. The number of irradiation beams of the laser light 424 may be 10 or more, or 20 or more. As the laser light with which the fuel capsule 306 is irradiated, compression laser light for compressing fuel and ignition laser light for igniting fuel may be combined.

The fuel supply device 408 introduces the fuel capsule 406 into the internal space 420 of the reaction vessel 410 through the fuel inlet 418. The reaction vessel 410 has the internal space 420 into which the fuel capsule 406 and the laser light 424 are introduced. The blanket 412 is provided inside the reaction vessel 410. The blanket 412 absorbs fast neutrons generated by fusion reaction in the fuel capsule 406 and converts them into heat. The blanket 412 includes a material that allows for fuel reproduction. The blanket 412 includes, for example, a solid material (for example, lithium titanate) containing lithium (Li) or a liquid material (for example, titanium lead, lithium-beryllium fluoride) and is structured to reproduce tritium by neutron capture. The containment vessel 414 is arranged outside the reaction vessel 410. A neutron shielding material 422 such as water is contained in the containment vessel 414.

Heat generated in the blanket 412 is transferred to a fluid flowing through piping 428 introduced into the reaction vessel 410 and then sent to a steam generator 430. The fluid flowing through the piping 428 is circulated by a pump (not illustrated) or the like. The steam generator 430 generates steam using the heat from the fluid flowing through the piping 428. The steam generated by the steam generator 430 is sent to a steam turbine 432 to drive the steam turbine 432. A generator 434 produces electricity using the driving force generated by the steam turbine 432.

The present disclosure has been described on the basis of the embodiments. It is to be understood by those skilled in the art that the present disclosure is not limited to the above-described embodiments, various design changes are possible, various modifications are possible, and such modifications are also within the scope of the present disclosure.

### INDUSTRIAL APPLICABILITY

According to one aspect of the present disclosure, the numerical aperture of the optical system with low chromatic aberration can be increased.

### REFERENCE SIGNS LIST

10, 10A X-ray mirror device, 12 outer mirror, 14, 14A inner mirror, 18 optical axis, 20 X-rays, 22 outer reflective surface, 24 inner reflective surface, 26, 26A back surface, 30, 30A, 30B, 30C, 30D, 30E, 30F deformable mirror, 32, 32B piezoelectric substrate, 33, 34 reflective surface electrode, 36, 37 back surface electrode, 38 power supply, 40 reflective surface, 42 back surface, 44, 44B first piezoelectric layer, 46, 46B second piezoelectric layer, 48 intermediate electrode, 60 X-ray microscope, 62 illumination optical system, 64 sample holder, 66 imaging optical system, 68 X-ray detector, 110 X-ray mirror device, 112 outer mirror, 114 inner mirror, 116 intermediate mirror, 120 X-rays, 122 outer reflective surface, 124 inner reflective surface, 126 back surface, 128 intermediate reflective surface, 130 back surface, 210 X-ray mirror device, 212 first outer mirror, 214 first inner mirror, 218 optical axis, 220 X-rays, 222 first outer reflective surface, 224 first inner reflective surface, 226 first back surface, 232 second outer mirror, 234 second inner mirror, 242 second outer reflective surface, 244 second inner reflective surface

## Claims

1. A mirror device comprising:
a first mirror having a first reflective surface on which light is incident; and
a second mirror located away from the first reflective surface in a direction normal to the first reflective surface,
wherein the second mirror has a second reflective surface on which the light is incident and an opposite surface to the second reflective surface, the opposite surface faces the first reflective surface, and the second reflective surface is deformable.

2. The mirror device according to claim 1, wherein at least one of the first reflective surface or the second reflective surface is formed as a total reflection mirror.

3. The mirror device according to claim 1, wherein at least one of the first reflective surface or the second reflective surface is formed as a multi-layered mirror with 100 or fewer layers.

4. The mirror device according to claim 1, wherein both the first reflective surface and the second reflective surface have curvature at least in an optical axis direction.

5. The mirror device according to claim 1, wherein the second mirror has a thickness between 10 µm and 1 mm, inclusive.

6. The mirror device according to claim 1, wherein a distance between the first mirror and the second mirror is between 50 µm and 5 mm, inclusive.

7. The mirror device according to claim 1,
wherein the second mirror includes:
a piezoelectric substrate having the second reflective surface and the opposite surface;
a first electrode located on the second reflective surface;
a second electrode located on the opposite surface; and
a power supply structured to apply a voltage between the first electrode and the second electrode.

8. The mirror device according to claim 7, wherein at least one of the first electrode or the second electrode has a polygonal outer contour with rounded corners.

9. The mirror device according to claim 7, wherein the piezoelectric substrate has a thickness between 10 µm and 1 mm, inclusive.

10. The mirror device according to claim 7, wherein a thickness of the piezoelectric substrate varies in a tapered manner in an optical axis direction.

11. The mirror device according to claim 7,
wherein at least one of the first electrode or the second electrode includes a plurality of electrodes arranged at intervals in an optical axis direction, and
wherein the power supply is capable of applying different voltages to the plurality of electrodes.

12. The mirror device according to claim 11, wherein each of the plurality of electrodes has a polygonal outer contour with rounded corners.

13. The mirror device according to claim 7, wherein the piezoelectric substrate is made of a piezoelectric single-crystal material.

14. The mirror device according to claim 13, wherein the piezoelectric single-crystal material includes lithium niobate (LN) or lithium tantalate (LT).

15. The mirror device according to claim 7, wherein the piezoelectric substrate includes a first piezoelectric layer having the second reflective surface and a second piezoelectric layer having the opposite surface, and the second piezoelectric layer is made of a material identical to a material of the first piezoelectric layer and has a polarization direction opposite to a polarization direction of the first piezoelectric layer.

16. The mirror device according to claim 7,
wherein the piezoelectric substrate includes a first piezoelectric layer having the second reflective surface and a second piezoelectric layer having the opposite surface, the second piezoelectric layer being made of a material identical to a material of the first piezoelectric layer,
wherein the second mirror further includes a third electrode located between the first piezoelectric layer and the second piezoelectric layer, and
wherein the power supply is structured to apply a voltage between the first electrode and the third electrode and apply a voltage between the third electrode and the second electrode.

17. The mirror device according to claim 1, further comprising a third mirror located between the first mirror and the second mirror.

18. The mirror device according to claim 1, further comprising:
a fourth mirror located on a side opposite to the first mirror across an optical axis; and
a fifth mirror located on a side opposite to the second mirror across the optical axis.

19. A mirror device comprising:
a piezoelectric substrate having a reflective surface on which a light ray is incident and an opposite surface to the reflective surface;
a first electrode located on the reflective surface;
a second electrode located on the opposite surface; and
a power supply structured to apply a voltage between the first electrode and the second electrode,
wherein the piezoelectric substrate includes a first piezoelectric layer having the reflective surface and a second piezoelectric layer having the opposite surface, and the second piezoelectric layer is made of a material identical to a material of the first piezoelectric layer and has a polarization direction opposite to a polarization direction of the first piezoelectric layer.

20. The mirror device according to claim 19, wherein at least one of the first electrode or the second electrode has a polygonal outer contour with rounded corners.

21. The mirror device according to any one of claims 1 to 20,
wherein the light corresponds to X-rays.

22. An optical device comprising:
an optical system including a mirror device according to any one of claims 1 to 20; and
a detector structured to detect light exiting the optical system.

23. An optical device comprising:
an optical system including a mirror device according to any one of claims 1 to 20; and
a sample holder structured to hold a sample that is irradiated with light exiting the optical system.

24. An optical device comprising:
a laser light source structured to output laser light;
a deformable mirror structured to correct a wavefront of the laser light; and
a focusing optical element structured to focus the laser light reflected by the deformable mirror,
wherein the deformable mirror includes:
a piezoelectric substrate having an incident surface on which the laser light is incident and an opposite surface to the incident surface and including single-crystal lithium niobate (LN);
a first electrode located on the incident surface;
a second electrode located on the opposite surface;
a dielectric multi-layered mirror located on the first electrode and structured to reflect the laser light; and
a power supply structured to apply a voltage between the first electrode and the second electrode.

25. The optical device according to claim 24,
wherein the piezoelectric substrate has a thickness of 10 mm or less, and
wherein a thickness from the incident surface to an upper surface of the dielectric multi-layered mirror is 1 mm or less.

26. The optical device according to claim 25,
wherein the piezoelectric substrate has a diameter of 10 cm or more, and
wherein the laser light reflected by the deformable mirror has a beam diameter of 10 cm or more.

27. The optical device according to any one of claims 24 to 26, wherein the laser light source is structured to output the laser light having a peak output of 1 TW or more.

28. A laser nuclear fusion reactor comprising:
an optical device according to any one of claims 24 to 26; and
a reaction vessel having an internal space into which the laser light output from the optical device is introduced, the reaction vessel being structured to store fuel in which nuclear fusion is induced by irradiation with the laser light.
